# EUROPEAN PATENT APPLICATION

(11) **EP 4 808 185 A1**
(43) Date of publication of application: **16.09.2026**
(21) Application number: 24892994.5
(22) Date of filing: 11.09.2024
(51) Int. Cl.: H04W 16/22

(54) **COMMUNICATION METHOD AND RELATED DEVICE**

(30) Priority: 24.11.2023 CN 202311600304
(71) Applicant: Huawei Technologies Co., Ltd., Shenzhen, Guangdong 518129 (CN)
(72) Inventor: YANG, Lu, Shenzhen, Guangdong 518129 (CN); LU, Jiaxun, Shenzhen, Guangdong 518129 (CN); LIU, Zhe, Shenzhen, Guangdong 518129 (CN); PENG, Chenghui, Shenzhen, Guangdong 518129 (CN); PENG, Jingchen, Shenzhen, Guangdong 518129 (CN); XIAO, Yao, Shenzhen, Guangdong 518129 (CN)
(74) Representative: Maiwald GmbH
(86) International application number: PCT/CN2024/118308
(87) International publication number: WO 2025/107835

(57) **Abstract**

This application provides a communication method and a related device for determining and deploying an AI model in a communication network through interaction between different communication apparatuses, enabling computational power of the communication apparatus to be applied to AI model processing. In the method, after sending first information to determine a first AI model group, a first communication apparatus receives second information, where the second information includes a model parameter of the first AI model group or a model parameter of a first AI model in the first AI model group, and the first AI model group includes the first AI model deployed on the first communication apparatus and a second AI model deployed on the second communication apparatus.

## Description

This application claims priority to Chinese Patent Application No. 202311600304.7, filed with the China National Intellectual Property Administration on November 24, 2023 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Wireless communication is transmission between two or more communication nodes without using conductors or cables. The communication nodes usually include network devices and terminal devices.

Currently, in a wireless communication system, a communication node usually has both signal transceiving and computing capabilities. Using a network device with the computing capability as an example, the computing capability primarily provides computational power support for the transceiving capability (for example, signal processing), enabling communication with other communication nodes.

However, in a communication network, in addition to the computing capability for providing computational power support for the foregoing communication task, a communication node may further have surplus computing capabilities. How to use these surplus computing capabilities is a critical technical challenge.

### SUMMARY

This application provides a communication method and a related device for determining and deploying an artificial intelligence (artificial intelligence, AI) model in a communication network through interaction between different communication apparatuses, enabling computational power of the communication apparatus to be applied to AI model processing.

A first aspect of this application provides a communication method. The method is performed by a first communication apparatus. The first communication apparatus may be a communication device (for example, a terminal device), the first communication apparatus may be some components (for example, a processor, a chip, or a chip system) in the communication device, or the first communication apparatus may be a logical module or software that can implement all or some functions of the communication device. In the method, the first communication apparatus sends first information, where the first information is used to determine a first AI model group, and the first AI model group includes a first AI model and a second AI model. The first AI model is deployed on the first communication apparatus, and the second AI model is deployed on a second communication apparatus; and an input of the first AI model includes an output of the second AI model, or an input of the second AI model includes an output of the first AI model. The first communication apparatus receives second information from the second communication apparatus, where the second information includes a model parameter of the first AI model group or a model parameter of the first AI model.

Based on the foregoing technical solution, the second communication apparatus is used as a receiver of the first information, and the second communication apparatus may determine the first AI model group based on the first information from the first communication apparatus, and deploy the first AI model in the first communication apparatus via the second information. Therefore, if a communication apparatus in a communication system is used as an AI participant node, and its computational power can be applied to AI model processing, the first information from the first communication apparatus may also be used as one of determining bases for the second communication apparatus to determine the AI model, so that the AI model determined by the second communication apparatus can be adapted to the first communication apparatus as much as possible, thereby improving processing performance of model processing subsequently performed by the first communication apparatus based on the AI model.

In this application, terms such as an AI model, a neural network model, an AI neural network model, a machine learning model, and an AI processing model may be replaced with each other.

It should be understood that, that the first AI model group includes a first AI model and a second AI model may be understood as that a function of the first AI model group is implemented through at least model processing of the first AI model and model processing of the second AI model. In other words, after receiving the second information, the first communication apparatus may deploy the first AI model in the first communication apparatus via the model parameter of the first AI model group or the model parameter of the first AI model included in the second information, and perform model processing on the first AI model. Correspondingly, the second communication apparatus may perform model processing on the second AI model deployed on the second communication apparatus. Optionally, the model processing may include one or more of model update processing, model training processing, and model inference processing.

It may be understood that the second communication apparatus may be implemented in a plurality of manners.

For example, the second communication apparatus may be a terminal device. Correspondingly, the first communication apparatus and the second communication apparatus may communicate with each other on a sidelink (sidelink, SL). In this case, the first AI model and the second AI model may be referred to as an end-to-end model, an end-to-end collaborative model, or the like.

For another example, the second communication apparatus may be a network device (for example, an access network device). Correspondingly, the first communication apparatus and the second communication apparatus may communicate with each other on uplink and downlink communication links. In this case, the first AI model and the second AI model may be referred to as an edge-end model, an edge-end collaborative model, an end-edge model, an end-edge collaborative model, or the like.

Optionally, when the first AI model group is considered as one AI model, the first AI model and the second AI model may be understood as two AI submodels in the AI model.

In this application, that one AI model is deployed on one communication apparatus (for example, the first AI model is deployed on the first communication apparatus, and the second AI model is deployed on the second communication apparatus) may be understood as that after obtaining a model parameter of the AI model, the communication apparatus obtains/generates/constructs the AI model based on the model parameter of the AI model, and the communication apparatus may subsequently perform model processing on the AI model.

Optionally, the model parameter may include one or more of a hyperparameter of the model, a dataset of the model (including input data of the model and label data corresponding to the input data), and a structure parameter of the model.

Optionally, one AI model group may include two or more AI models. For example, in addition to the first AI model and the second AI model, the first AI model group may further include another AI model. The another AI model may be deployed on another communication apparatus different from the first communication apparatus and the second communication apparatus. This is not limited herein.

It should be understood that transmission of wireless communication signals (for example, receiving and sending of configuration information of a communication resource and receiving and sending of a reference signal) may be performed between different communication apparatuses (for example, the first communication apparatus and the second communication apparatus).

Optionally, the AI models (for example, the first AI model, the second AI model, and the following third to sixth AI models) in this application may be used for management (including at least one of configuration, update, and optimization) of the wireless communication signal. For example, the AI model may include one or more of an AI model used for modulation and/or demodulation, an AI model used for channel prediction, an AI model used for beam management, an AI model used for assisted positioning, an AI model used for channel compression, an AI model used for resource scheduling, and an AI model used for replacing one or more modules in a transmitter and/or a receiver. Alternatively, the AI model in this application may be an AI model used for another AI task, for example, an AI model used for image recognition, an AI model used for natural language processing, or an AI model used for computer vision.

A second aspect of this application provides a communication method. The method is performed by a second communication apparatus. The second communication apparatus may be a communication device (for example, a network device or a terminal device), the second communication apparatus may be some components (for example, a processor, a chip, or a chip system) in the communication device, or the second communication apparatus may be a logical module or software that can implement all or some functions of the communication device. In the method, the second communication apparatus receives first information. The second communication apparatus determines a first AI model group based on the first information, where the first AI model group includes a first AI model and a second AI model. The first AI model is deployed on a first communication apparatus, the second AI model is deployed on the second communication apparatus, and an input of the first AI model includes an output of the second AI model, or an input of the second AI includes an output of the first AI model. The second communication apparatus sends second information, where the second information includes a model parameter of the first AI model group or a model parameter of the first AI model.

Based on the foregoing technical solution, the second communication apparatus is used as a receiver of the first information, and the second communication apparatus may determine the first AI model group based on the first information from the first communication apparatus, and deploy the first AI model in the first communication apparatus via the second information. Therefore, if a communication apparatus in a communication system is used as an AI participant node, and its computational power can be applied to AI model processing, the first information from the first communication apparatus may also be used as one of determining bases for the second communication apparatus to determine the AI model, so that the AI model determined by the second communication apparatus can be adapted to the first communication apparatus as much as possible, thereby improving processing performance of model processing subsequently performed by the first communication apparatus based on the AI model.

In a possible implementation of the first aspect or the second aspect, the second communication apparatus is a functional entity that determines, based on the first information, an AI model group list, where the AI model group list includes one or more AI model groups, and the one or more AI model groups include the first AI model group.

Based on the foregoing technical solution, the second communication apparatus may communicate with one or more first communication apparatuses, and the second communication apparatus may receive information (for example, one or more pieces of first information) from the one or more first communication apparatuses, to generate/obtain/determine one or more AI model groups. In other words, the second communication apparatus may collect information and generate a model based on the collected information. Subsequently, the second communication apparatus may deploy an AI model in one or more first communication apparatuses.

Optionally, the AI model group list may include one or more AI model groups, and each AI model group may include two or more AI models. As described above, a relationship between the AI model group and the AI model may also be understood as a relationship between the AI model and the AI submodel. Therefore, the AI model group list may alternatively be replaced with an AI model list. That is, the AI model list may include one or more AI models.

Optionally, the list may be replaced with another term like a set, a dictionary, a combination, space, or the like.

In a possible implementation of the first aspect or the second aspect, the second communication apparatus is a functional entity that determines, based on the first information, the AI model group list and selects, from the AI model group list, part or all of AI model groups to be used by the first communication apparatus.

Based on the foregoing technical solution, after the second communication apparatus determines the AI model group list based on the first information, a function implemented by the second communication apparatus may further include: selecting, from the AI model group list, the part or all of the AI model groups used by the first communication apparatus. In other words, in addition to collecting the information and generating the model based on the collected information, the second communication apparatus may further perform model selection, so that the second communication apparatus can subsequently deploy, in one or more first communication apparatuses, an AI model adapted to the one or more first communication apparatuses.

In a possible implementation of the first aspect or the second aspect, the first information includes first dimension information or second dimension information. When the input of the first AI model includes the output of the second AI model, the first dimension information is used to determine dimension information of input data of the first AI model or dimension information of output data of the second AI model. When the input of the second AI model includes the output of the first AI model, the second dimension information is used to determine dimension information of output data of the first AI model or dimension information of input data of the second AI model.

Based on the foregoing technical solution, the second communication apparatus may determine, via the first information, the dimension information of the data transmitted on the communication link. When a communication bandwidth between the first communication apparatus and the second communication apparatus is fixed, because a dimension of the data transmitted on the communication link is associated with processing performance of the AI model, an implementation process in which the second communication apparatus determines the first AI model group can be simplified in this manner, so that processing performance of the AI model included in the first AI model group can also be improved while complexity of the second communication apparatus is reduced.

In a possible implementation of the first aspect or the second aspect, the dimension information includes at least one of the following: an upper limit value of a dimension, a lower limit value of the dimension, the dimension expected by the first communication apparatus (or the dimension not expected by the first communication apparatus), and a value range of the dimension expected by the first communication apparatus (or a value range of the dimension not expected by the first communication apparatus).

Optionally, the dimension information may include a value, a quantized value, an index of the value, an index of the quantized value of any of the foregoing items. Other implementations are also possible.

Based on the foregoing technical solution, the dimension information determined based on the first dimension information or the second dimension information may include at least one of the foregoing items, so that flexibility of implementing the solution is improved.

For example, when the dimension information includes the upper limit value of the dimension and/or the lower limit value of the dimension, the second communication apparatus may use, as one of bases for determining the AI model, a range indicated by the upper limit value and/or the lower limit value, so that flexibility of implementing the solution can be improved.

For another example, when the dimension information includes the dimension expected by the first communication apparatus and/or the value range of the dimension expected by the first communication apparatus, the AI model determined by the second communication apparatus based on the dimension information can meet an expectation of the first communication apparatus.

In a possible implementation of the first aspect or the second aspect, the first dimension information or the second dimension information is determined based on channel state information (channel state information, CSI).

Based on the foregoing technical solution, the first dimension information or the second dimension information included in the first information may be determined based on the channel state information, so that the first dimension information or the second dimension information can reflect a channel feature of a radio channel between the first communication apparatus and the second communication apparatus to some extent. In this way, the AI model that may be subsequently obtained based on the first information can be adapted to the channel feature of the radio channel, to improve transmission performance of AI data corresponding to the AI model. In addition, when the AI model obtained based on the first information can be adapted to the channel feature of the radio channel, the data transmitted on the radio link can also meet a channel bandwidth requirement as much as possible, so that model performance of the AI model included in the first AI model group is improved.

Optionally, the channel state information may include information about a channel from the first communication apparatus to the second communication apparatus, and/or information about a channel from the second communication apparatus to the first communication apparatus. When the first communication apparatus is a terminal device and the second communication apparatus is a network device, the information about the channel from the first communication apparatus to the second communication apparatus may be understood as uplink channel information, and the information about the channel from the second communication apparatus to the first communication apparatus may be understood as downlink channel information.

Optionally, the channel state information may be obtained based on a reference signal.

For example, when the first communication apparatus and the second communication apparatus communicate with each other over a sidelink, the reference signal may include a sidelink synchronization signal/physical broadcast channel block (sidelink synchronization signal/physical broadcast channel block, sidelink SSB, SL-SSB, or S-SS/PSBCH block), a sidelink channel state information reference signal (sidelink channel state information reference signal, SL-CSI-RS), and the like.

For another example, when the first communication apparatus and the second communication apparatus communicate with each other over an uplink and a downlink, the reference signal may include a channel state information reference signal (channel state information reference signal, CSI-RS), a sounding reference signal (sounding reference signal, SRS), and the like.

In a possible implementation of the first aspect or the second aspect, the first information includes at least one of the following: the input data of the first AI model, label data of the input data of the first AI model, local computational power status information of the first communication apparatus, and the channel state information.

Based on the foregoing technical solution, the first information may include the at least one item of the foregoing information. In other words, the second communication apparatus may determine the first AI model group based on the at least one item of the foregoing information, to improve flexibility of solution implementation.

In an implementation example, when the first information includes the input data of the first AI model and the label data of the input data of the first AI model, because the input data may be used as the input of the first AI model, and the label data may be used as one of bases for determining model processing performance of the first AI model, for the second communication apparatus, the second communication apparatus may obtain an AI model with good performance based on the two items of information.

In addition, for the second communication apparatus, the second communication apparatus may implement mutual information-based mathematical calculation based on the two pieces of information and the AI data (for example, the input data of the second AI model or the output data of the second AI model) received and sent by the second communication apparatus on the radio link, and determine the first AI model group based on a result of the mathematical calculation, to improve model performance of the AI model included in the first AI model group on the premise that the data on the radio link meets a bandwidth.

In another implementation example, when the first information includes the local computational power status information of the first communication apparatus, a complexity requirement of the model processing of the AI model may be related to a local computational power status of the first communication apparatus. Therefore, for the second communication apparatus, the first AI model group determined by the second communication apparatus based on the local computational power status information may be adapted to a local computational power status of the first communication apparatus, so that the first AI model that meets the local computational power status is provided, thereby improving a success rate of performing model processing by the first communication apparatus based on the first AI model.

In another implementation example, when the first information includes the channel state information, because the channel state information may reflect the channel feature of the radio channel between the first communication apparatus and the second communication apparatus, for the second communication apparatus, the second communication apparatus determines the first AI model group based on the channel state information, to be adapted to the channel feature, so that the data transmitted on the radio link meets the channel bandwidth requirement as much as possible, to improve transmission performance of the AI data corresponding to the AI model.

It may be understood that, when the first information includes two or more items of the foregoing information, based on a technical gain achieved in any item of information in the foregoing descriptions, a further superposition gain may be obtained via the two or more items of information.

In a possible implementation of the first aspect or the second aspect, that the first information is used to determine the first AI model group includes: The first information is used to update a second AI model group to obtain the first AI model group; and the second AI model group includes a third AI model and a fourth AI model, the third AI model is deployed on the first communication apparatus, the fourth AI model is deployed on the second communication apparatus, and an input of the third AI model includes an output of the fourth AI model, or an input of the fourth AI includes an output of the third AI model.

Optionally, "update" may be replaced with another term, for example, "modify", "iterate", "optimize", "process", or the like.

Optionally, when the second AI model group is considered as one AI model, the third AI model and the fourth AI model may be understood as two AI submodels in the AI model.

Based on the foregoing technical solution, for the second communication apparatus, after the second communication apparatus receives the first information, the second communication apparatus may update the second AI model group based on the first information, to obtain the first AI model group. In other words, the first information sent by the first communication apparatus may be used to update another AI model, so that the solution is applicable to an AI model update scenario.

Optionally, the third AI model and the second AI model included in the second AI model group may be general models or dedicated models, so that different types of models are updated.

It should be understood that the general model may be referred to as a basic model, a large model, or an L0 model. The dedicated model may be referred to as a small model, an L1 model, an L2 model, or the like.

A large model is used as an example. The large model may be a machine learning model with a large quantity of parameters and a complex structure, and can process massive data and complete various complex tasks, such as natural language processing, computer vision, and speech recognition.

Optionally, the large model is usually built upon deep neural networks and has billions or even hundreds of billions of parameters.

Optionally, the large model may be designed to improve an expression capability and prediction performance of the model, to process more complex tasks and data.

Optionally, the large model can learn complex patterns and features by training massive data, has generalization capabilities that are more powerful, and can accurately predict unprocessed data.

In contrast, the small model may be a model with fewer parameters and fewer layers. Usually, compared with the small model, the large model usually has more parameters and deeper layers, and has a stronger expression capability and higher accuracy. However, the large model also requires more compute resources and time for training and inference, and is applicable to a scenario with a large data amount and sufficient compute resources, for example, cloud computing, high-performance computing, or artificial intelligence.

Optionally, the small model has advantages such as lightweight, high efficiency, and easy deployment, and is applicable to a scenario with a small data amount and limited compute resources, for example, a mobile application, an embedded device, or an internet of things.

In a possible implementation of the first aspect or the second aspect, the first information is information sent periodically, and/or, the second information is information sent periodically.

Based on the foregoing technical solution, the first information may be one of the bases for determining the AI model, and the second information may be used to deploy the AI model. The AI model can be periodically determined and/or periodically deployed in a manner of periodically sending the first information and/or the second information between the first communication apparatus and the second communication apparatus, so that the AI model is iteratively updated a plurality of times through a periodic process.

In a possible implementation of the first aspect or the second aspect, the AI model in the first AI model group is a dedicated model.

Based on the foregoing technical solution, the first communication apparatus may be a terminal device. Therefore, an AI model deployed on the terminal device may be a dedicated model, and the first information sent by the terminal device may be used to determine the dedicated model. Different terminal devices may have different device-side characteristics (for example, different local data, different local computational powers, and different channel features). Therefore, in this manner in which the dedicated model is deployed on the terminal device, the AI model deployed on the terminal device can be adapted to the device-side characteristic of the terminal device, so that model processing performance of the AI model is improved.

A third aspect of this application provides a communication method. The method is performed by a second communication apparatus. The second communication apparatus may be a communication device (for example, a cloud server or a core network device), the second communication apparatus may be some components (for example, a processor, a chip, or a chip system) in the communication device, or the second communication apparatus may be a logical module or software that can implement all or some functions of the communication device. In the method, the second communication apparatus sends third information, where the third information is used to determine a third AI model group, and the third AI model group includes a fifth AI model and a sixth AI model. The fifth AI model is deployed on a first communication apparatus, the sixth AI model is deployed on the second communication apparatus, and an input of the fifth AI model includes an output of the sixth AI model, or an input of the sixth AI includes an output of the fifth AI model. The second communication apparatus receives fourth information from a third communication apparatus, where the fourth information includes a model parameter of the third AI model group.

Based on the foregoing technical solution, the third communication apparatus is used as a receiver of the third information. The third communication apparatus may determine the third AI model group based on the third information from the second communication apparatus, and via the fourth information, the second communication apparatus can subsequently deploy the fifth AI model in the first communication apparatus, and deploy the sixth AI model in the second communication apparatus. Therefore, if a communication apparatus in a communication system is used as an AI participant node, and its computational power can be applied to AI model processing, the third information from the second communication apparatus may also be used as one of determining bases for the third communication apparatus to determine the AI model, so that the AI model determined by the third communication apparatus can be adapted to the second communication apparatus as much as possible, thereby improving a success rate of subsequently performing model processing on the AI model by the second communication apparatus.

It should be understood that, that the third AI model group includes a fifth AI model and the fifth AI model may be understood as that a function of the third AI model group is implemented through at least model processing of the fifth AI model and model processing of the sixth AI model. In other words, after receiving the fourth information, the second communication apparatus may determine a model parameter of the fifth AI model and a model parameter of the sixth AI model. In addition, the second communication apparatus may deploy the fifth AI model in the first communication apparatus, and deploy the sixth AI model in the second communication apparatus, so that model processing of the fifth AI model and the sixth AI model is implemented. Optionally, the model processing may include one or more of model update processing, model training processing, and model inference processing.

Optionally, when the third AI model group is considered as one AI model, the fifth AI model and the sixth AI model may be understood as two AI submodels in the AI model.

It should be noted that the second communication apparatus and the third communication apparatus may be implemented in a plurality of manners. The second communication apparatus may be a terminal device or an access network device, and the third communication apparatus may be a cloud server or a core network device. For example, when the third communication apparatus is a cloud server, the second communication apparatus may communicate with the cloud server via a core network device. For another example, when the third communication apparatus is a core network device, the second communication apparatus may be a terminal device, and the terminal device may communicate with the core network device via an access network device. For another example, when the third communication apparatus is a core network device, the second communication apparatus may be an access network device, and the access network device may communicate with the core network device through a communication interface between the access network device and the core network device.

A fourth aspect of this application provides a communication method. The method is performed by a third communication apparatus. The third communication apparatus may be a network device (for example, an access network device, a core network device, or a cloud server), the third communication apparatus may be some components (for example, a processor, a chip, or a chip system) in the network device, or the third communication apparatus may be a logical module or software that can implement all or some functions of the network device. In the method, the third communication apparatus receives third information. The third communication apparatus determines a third AI model group based on the third information, where the third AI model group includes a fifth AI model and a sixth AI model. The fifth AI model is deployed on a first communication apparatus, and the sixth AI model is deployed on a second communication apparatus; and an input of the fifth AI model includes an output of the sixth AI model, or an input of the sixth AI model includes an output of the fifth AI model. The third communication apparatus sends fourth information, where the fourth information includes a model parameter of the third AI model group.

Based on the foregoing technical solution, after receiving the third information used to determine the third AI model group, the third communication apparatus may send the fourth information, where the third information includes the model parameter of the third AI model group. In other words, the third communication apparatus is used as a receiver of the third information. The third communication apparatus may determine the third AI model group based on the third information from the second communication apparatus, and via the fourth information, the second communication apparatus can subsequently deploy the fifth AI model in the first communication apparatus, and deploy the sixth AI model in the second communication apparatus. Therefore, if a communication apparatus in a communication system is used as an AI participant node, and its computational power can be applied to AI model processing, the third information from the second communication apparatus may also be used as one of determining bases for the third communication apparatus to determine the AI model, so that the AI model determined by the third communication apparatus can be adapted to the second communication apparatus as much as possible, thereby improving a success rate of subsequently performing model processing on the AI model by the second communication apparatus.

In a possible implementation of the third aspect or the fourth aspect, the third communication apparatus is a functional entity that determines, based on the third information, the third AI model group.

Based on the foregoing technical solution, the third communication apparatus may communicate with one or more second communication apparatuses, and the third communication apparatus may receive information (for example, one or more pieces of third information) from the one or more second communication apparatuses, to generate/obtain/determine a third AI model group. In other words, the second communication apparatus may collect information and generate a model based on the collected information. Subsequently, the second communication apparatus may deploy an AI model in one or more second communication apparatuses (and corresponding first communication apparatuses).

Optionally, the AI model in the third AI model group is a general model. In this manner, the third communication apparatus may determine the general model via information (for example, one or more pieces of third information) from the one or more second communication apparatuses. Subsequently, the general model with high generalization and good universality may be deployed on each of the plurality of second communication apparatuses and a first communication apparatus connected to each of the second communication apparatuses.

In a possible implementation of the third aspect or the fourth aspect, the third information includes third dimension information or fourth dimension information. When the input of the fifth AI model includes the output of the sixth AI model, the third dimension information is used to determine dimension information of input data of the fifth AI model or dimension information of output data of the sixth AI model. When the input of the sixth AI model includes the output of the fifth AI model, the fourth dimension information is used to determine dimension information of output data of the fifth AI model or dimension information of input data of the sixth AI model.

Based on the foregoing technical solution, the third communication apparatus may determine, via the third information, dimension information of data transmitted on a communication link between the first communication apparatus and the second communication apparatus. When a communication bandwidth between the first communication apparatus and the second communication apparatus is fixed, because a dimension of the data transmitted on the communication link is associated with processing performance of the AI model, an implementation process in which the third communication apparatus determines the first AI model group can be simplified in this manner, so that processing performance of the AI model included in the first AI model group can also be improved while complexity of the third communication apparatus is reduced.

In a possible implementation of the third aspect or the fourth aspect, the dimension information includes at least one of the following: an upper limit value of a dimension, a lower limit value of the dimension, the dimension expected by the second communication apparatus (or the dimension not expected by the first communication apparatus), and a value range of the dimension expected by the second communication apparatus (or a value range of the dimension not expected by the first communication apparatus).

Optionally, the dimension information may include a value, a quantized value, an index of the value, an index of the quantized value of any of the foregoing items. Other implementations are also possible.

Based on the foregoing technical solution, the dimension information determined based on the third dimension information or the fourth dimension information may include at least one of the foregoing items, so that flexibility of implementing the solution is improved.

For example, when the dimension information includes the upper limit value of the dimension and/or the lower limit value of the dimension, the third communication apparatus may use, as one of bases for determining the AI model, a range indicated by the upper limit value and/or the lower limit value, so that flexibility of implementing the solution can be improved.

For another example, when the dimension information includes the dimension expected by the second communication apparatus and/or the value range of the dimension expected by the second communication apparatus, the AI model determined by the third communication apparatus based on the dimension information can meet an expectation of the second communication apparatus.

In a possible implementation of the third aspect or the fourth aspect, the third dimension information or the fourth dimension information is determined based on channel state information.

Based on the foregoing technical solution, the third dimension information or the fourth dimension information included in the third information may be determined based on the channel state information, so that the third dimension information or the fourth dimension information can reflect a channel feature of a radio channel between the first communication apparatus and the second communication apparatus to some extent. In this way, the AI model that may be subsequently obtained based on the third information can be adapted to the channel feature of the radio channel, to improve transmission performance of AI data corresponding to the AI model. In addition, when the AI model obtained based on the third information can be adapted to the channel feature of the radio channel, the data transmitted on the radio link can also meet a channel bandwidth requirement as much as possible, so that model performance of the AI model included in the third AI model group is improved.

In a possible implementation of the third aspect or the fourth aspect, the third information includes at least one of the following: a model parameter of an AI model in one or more AI model groups, where each group of the one or more AI model groups includes a dedicated model deployed on the first communication apparatus and a dedicated model deployed on the second communication apparatus; data from one or more first communication apparatuses connected to the second communication apparatus; and input data of an AI model deployed on the second communication apparatus and label data of the input data of the AI model deployed on the second communication apparatus.

Based on the foregoing technical solution, the third information may be implemented via the at least one of the foregoing items, so that flexibility of implementing the solution is improved.

In an implementation example, when the third information includes the model parameter of the AI model in the one or more AI model groups, the third communication apparatus may obtain, based on the third information, one or more dedicated models deployed on the first communication apparatus and the second communication apparatus. In this manner, the third communication apparatus may obtain a model characteristic of the one or more dedicated models, and reflect the obtained characteristic in the third AI model group, to improve generalization (or universality) of the general model included in the third AI model group.

In another implementation example, when the third information includes the data from the one or more first communication apparatuses (for example, a terminal device) connected to the second communication apparatus, different terminal devices may have different data characteristics (for example, different data may be collected at different geographical locations, different data may be collected at different time, and different data may correspond to different radio channels of a user). Therefore, in this manner, the third communication apparatus obtains the third AI model group based on these data characteristics, to improve generalization (or universality) of the general model included in the third AI model group.

In another implementation example, when the third information includes the input data of the AI model deployed on the second communication apparatus and the label data of the input data of the AI model deployed on the second communication apparatus, because the input data may be used as the input of the sixth AI model, and the label data may be used as one of bases for determining model processing performance of the sixth AI model, for the third communication apparatus, the third communication apparatus may obtain an AI model with good performance based on the two items of information.

In addition, for the third communication apparatus, the third communication apparatus may implement mutual information-based mathematical calculation based on the two pieces of information and the AI data (for example, the input data of the sixth AI model or the output data of the sixth AI model) received and sent by the second communication apparatus on the radio link, and determine the third AI model group based on a result of the mathematical calculation, to improve model performance of the AI model included in the third AI model group on the premise that the data on the radio link meets a bandwidth.

It may be understood that, when the third information includes two or more items of the foregoing information, based on a technical gain achieved in any item of information in the foregoing descriptions, a further superposition gain may be obtained via the two or more items of information.

Optionally, each item of information included in the third information may be a part of information obtained by the second communication apparatus through filtering from a plurality of items of information.

In a possible implementation of the third aspect or the fourth aspect, that the third information is used to determine a third AI model group includes: The third information is used to update a fourth AI model group to obtain the third AI model group; and the fourth AI model group includes a seventh AI model and an eighth AI model, the seventh AI model is deployed on the first communication apparatus, the eighth AI model is deployed on the second communication apparatus, and an input of the seventh AI model includes an output of the eighth AI model, or an input of the eighth AI includes an output of the seventh AI model.

Optionally, when the fourth AI model group is considered as one AI model, the seventh AI model and the eighth AI model may be understood as two AI submodels in the AI model.

Based on the foregoing technical solution, for the third communication apparatus, after receiving the third information, the third communication apparatus may update the fourth AI model group based on the third information, to obtain the third AI model group. In other words, the third information sent by the second communication apparatus may be used to update another AI model, so that the solution is applicable to an AI model update scenario.

In a possible implementation of the third aspect or the fourth aspect, the third information is information sent periodically, and/or the fourth information is information sent periodically.

Based on the foregoing technical solution, the third information may be one of the bases for determining the AI model, and the fourth information may be used to deploy the AI model. The AI model can be periodically determined and/or periodically deployed in a manner of periodically sending the third information and/or the fourth information between the second communication apparatus and the third communication apparatus, so that the AI model is iteratively updated a plurality of times through a periodic process.

A fifth aspect of this application provides a communication apparatus. The apparatus is a first communication apparatus, and the apparatus includes a transceiver unit and a processing unit. The processing unit is configured to determine first information. The transceiver unit is configured to send the first information, where the first information is used to determine a first artificial intelligence AI model group, and the first AI model group includes a first AI model and a second AI model. The first AI model is deployed on the first communication apparatus, and the second AI model is deployed on a second communication apparatus; and an input of the first AI model includes an output of the second AI model, or an input of the second AI model includes an output of the first AI model. The transceiver unit is further configured to receive second information from the second communication apparatus, where the second information includes a model parameter of the first AI model group or a model parameter of the first AI model.

In the fifth aspect of this application, composition modules of the communication apparatus may be further configured to perform steps performed in the possible implementations of the first aspect, and achieve corresponding technical effects. For details, refer to the first aspect. Details are not described herein again.

A sixth aspect of this application provides a communication apparatus. The apparatus is a second communication apparatus, and the apparatus includes a transceiver unit and a processing unit. The transceiver unit receives first information. The processing unit is configured to determine a first AI model group based on the first information, where the first AI model group includes a first AI model and a second AI model. The first AI model is deployed on a first communication apparatus, the second AI model is deployed on the second communication apparatus, and an input of the first AI model includes an output of the second AI model, or an input of the second AI includes an output of the first AI model. The transceiver unit is further configured to send second information, where the second information includes a model parameter of the first AI model group or a model parameter of the first AI model.

In the sixth aspect of this application, composition modules of the communication apparatus may be further configured to perform steps performed in the possible implementations of the second aspect, and achieve corresponding technical effects. For details, refer to the second aspect. Details are not described herein again.

A seventh aspect of this application provides a communication apparatus. The apparatus is a second communication apparatus, and the apparatus includes a transceiver unit and a processing unit. The processing unit is configured to determine third information. The transceiver unit is configured to send third information, where the third information is used to determine a third AI model group, and the third AI model group includes a fifth AI model and a sixth AI model. The fifth AI model is deployed on a first communication apparatus, the sixth AI model is deployed on the second communication apparatus, and an input of the fifth AI model includes an output of the sixth AI model, or an input of the sixth AI includes an output of the fifth AI model. The transceiver unit is further configured to receive fourth information from a third communication apparatus, where the fourth information includes a model parameter of the third AI model group.

In the seventh aspect of this application, composition modules of the communication apparatus may be further configured to perform steps performed in the possible implementations of the third aspect, and achieve corresponding technical effects. For details, refer to the third aspect. Details are not described herein again.

An eighth aspect of this application provides a communication apparatus. The apparatus is a third communication apparatus, and the apparatus includes a transceiver unit and a processing unit. The transceiver unit is configured to receive third information. The processing unit is configured to determine a third AI model group based on the third information, where the third AI model group includes a fifth AI model and a sixth AI model. The fifth AI model is deployed on a first communication apparatus, and the sixth AI model is deployed on a second communication apparatus; and an input of the fifth AI model includes an output of the sixth AI model, or an input of the sixth AI model includes an output of the fifth AI model. The transceiver unit is further configured to send fourth information, where the fourth information includes a model parameter of the third AI model group.

In the eighth aspect of this application, composition modules of the communication apparatus may be further configured to perform steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is coupled to a memory. The memory is configured to store a program or instructions. The at least one processor is configured to execute the program or the instructions, to cause the apparatus to implement the method according to any possible implementation of any one of the first aspect to the fourth aspect.

In a possible implementation, the communication apparatus further includes the memory. Optionally, the processor and the memory are integrated together.

A tenth aspect of this application provides a communication apparatus, including at least one logic circuit and an input/output interface. The logic circuit is configured to perform the method according to any possible implementation of any one of the first aspect to the fourth aspect.

An eleventh aspect of this application provides a communication system. The communication system includes the foregoing first communication apparatus and second communication apparatus. Alternatively, the communication system includes the foregoing second communication apparatus and third communication apparatus. Alternatively, the communication system includes the foregoing first communication apparatus, second communication apparatus, and third communication apparatus.

A twelfth aspect of this application provides a computer-readable storage medium. The storage medium is configured to store one or more computer-executable instructions. When the computer-executable instructions are executed by a processor, the processor performs the method according to any possible implementation of any one of the first aspect to the fourth aspect.

A thirteenth aspect of this application provides a computer program product (or referred to as a computer program). When the computer program in the computer program product is executed by a processor, the processor performs the method according to any possible implementation of any one of the first aspect to the fourth aspect.

A fourteenth aspect of this application provides a chip system. The chip system includes at least one processor, configured to support a communication apparatus in implementing the method according to any one of the possible implementations of any one of the first aspect to the fourth aspect.

In a possible design, the chip system may further include a memory. The memory is configured to store program instructions and data that are necessary for the communication apparatus. The chip system may include a chip, or may include the chip and another discrete device. Optionally, the chip system further includes an interface circuit, and the interface circuit provides program instructions and/or data for the at least one processor.

For technical effects achieved by any design manner in the third aspect to the tenth aspect, refer to the technical effects achieved by different design manners in the first aspect to the fourth aspect. Details are not described herein again.

### BRIEF DESCRIPTION OF DRAWINGS

FIG. 1a and FIG. 1b are diagrams of communication systems according to this application;
FIG. 2a to FIG. 2g are diagrams of AI processing processes according to this application;
FIG. 3 is an interaction diagram of a communication method according to this application;
FIG. 4 to FIG. 6 are interaction diagrams of communication methods according to this application; and
FIG. 7 to FIG. 11 are diagrams of communication apparatuses according to this application.

### DESCRIPTION OF EMBODIMENTS

First, some terms in embodiments of this application are explained and described, to facilitate understanding of a person skilled in the art.
(1) A terminal device may be a wireless terminal device that can receive scheduling and indication information of a network device. The wireless terminal device may be a device that provides voice and/or data connectivity for a user, a handheld device with a wireless connection function, or another processing device connected to a wireless modem.

The terminal device may communicate with one or more core networks or an internet through a radio access network (radio access network, RAN). The terminal device may be a mobile terminal device, for example, a mobile phone (also referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a pad (Pad), or a computer with a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in a communication system (for example, a 6th generation (6th generation, 6G) communication system) evolved after a 5th generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may further obtain an AI service provided by a network device. Optionally, the terminal device may further have an AI processing capability.

(2) A network device may be a device in a wireless network. For example, the network device may be a RAN node (or device) that connects a terminal device to the wireless network, and may also be referred to as a base station. Currently, some examples of RAN devices are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point AP, and the like. In addition, in a network structure, the network device may include a central unit (central unit, CU) node, a distributed unit (distributed unit, DU) node, or a RAN device including the CU node and the DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a V2X technology may be a road side unit (road side unit, RSU).

In another possible scenario, a plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that can be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), or a session management function (session management function, SMF) in a 5G network. In addition, the core network device may further include another core network device in the 5G network and a next generation network of the 5G network.

In embodiments of this application, the network device may alternatively be a network node with an AI capability, and may provide an AI service for a terminal or another network device, for example, may be an AI node, a computational power node, a RAN node with an AI capability, or a core network element with an AI capability on a network side (an access network or a core network).

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, the network device is used as an example of the apparatus configured to implement the function of the network device.

(3) Configuration and preconfiguration: In this application, both the configuration and the preconfiguration are used. The configuration means that a network device/server sends configuration information of some parameters or values of parameters to a terminal via a message or signaling, so that the terminal determines, based on the values or the information, a communication parameter or a resource used for transmission. The preconfiguration is similar to the configuration, and may be parameter information or a parameter value pre-negotiated by the network device/server and the terminal device, or may be parameter information or a parameter value that is used by the base station/network device or the terminal device and that is specified in a standard protocol, or may be parameter information or a parameter value pre-stored in the base station/server or the terminal device. This is not limited in this application.

Further, these values and parameters may be changed or updated.

(4) Terms "system" and "network" may be used interchangeably in embodiments of this application. "A plurality of" refers to two or more than two. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may also be understood as "outputting" of a chip interface, and "receiving" may also be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing such as encoding and modulation may be performed on the information between the source end at which the information is sent and the destination end, but the destination end may understand valid information from the source end. Similar descriptions in this application may be understood similarly, and details are not described again.

(6) In embodiments of this application, an "indication" may include a direct indication and an indirect indication, or may include an explicit indication and an implicit indication. Information indicated by a piece of information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pre-agreed pieces of information (for example, predefined in a protocol), to reduce indication overheads to some extent. A specific indication manner is not limited in this application. It may be understood that, for a transmitter of the indication information, the indication information may indicate to-be-indicated information, and for a receiver of the indication information, the indication information may be used to determine to-be-indicated information.

In this application, for same or similar parts of embodiments, mutual reference may be made between embodiments, unless otherwise specified. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

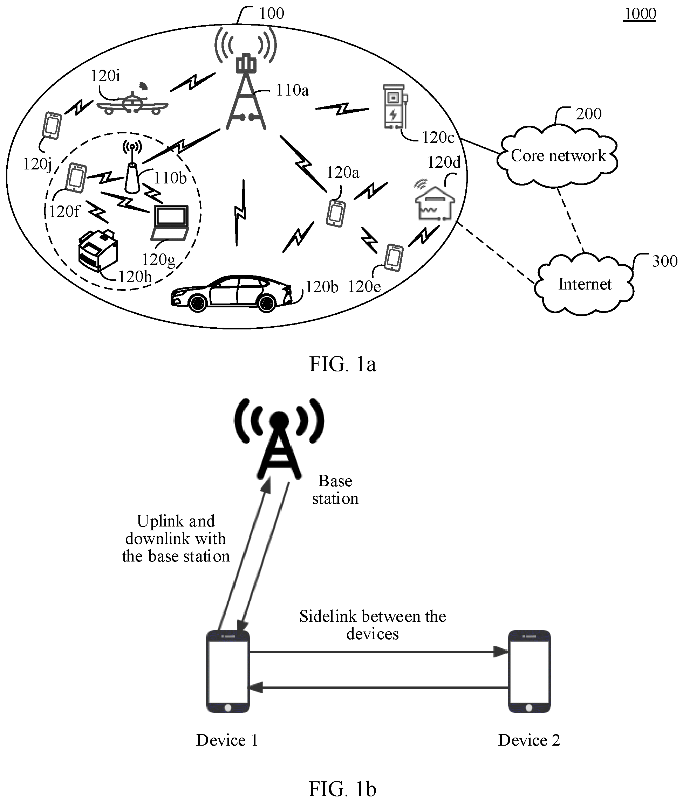

FIG. 1a is a diagram of an architecture of a communication system 1000 to which an embodiment of this application is applied. As shown in FIG. 1a, the communication system includes a RAN 100 and a core network 200. Optionally, the communication system 1000 may further include an internet 300. The RAN 100 includes at least one RAN node (for example, 110a and 110b in FIG. 1a, collectively referred to as 110), and may further include at least one terminal (for example, 120a to 120j in FIG. 1a, collectively referred to as 120). The RAN 100 may further include another RAN node, for example, a wireless relay device and/or a wireless backhaul device (not shown in FIG. 1a). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, an NR system, and a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

For ease of description, the following is described by using an example in which the base station is used as the RAN node.

The base station and the terminal may be at fixed positions or may be movable. The base station and the terminal may be deployed in land, including being deployed indoors or outdoors, or being deployed to be handheld or vehicle-mounted; may be deployed in a water surface; or may be deployed in a plane, a balloon, and a satellite. Application scenarios of the base station and the terminal are not limited in embodiments of this application.

Roles of the base station and the terminal may be relative. For example, a helicopter or an uncrewed aerial vehicle 120i in FIG. 1a may be configured as a mobile base station. For the terminal 120j that accesses the radio access network 100 via 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, relative to 110a, 120i is also a base station. Therefore, both the base station and the terminal may be collectively referred to as communication apparatuses. 110a and 110b in FIG. 1a may be referred to as communication apparatuses having a function of the base station, and 120a to 120j in FIG. 1a may be referred to as communication apparatuses having a function of the terminal.

Communication between the base station and the terminal, between base stations, or between terminals may be performed on a licensed spectrum, or may be performed on an unlicensed spectrum, or may be performed on both the licensed spectrum and the unlicensed spectrum. Communication may be performed on a spectrum below 6 gigahertz (gigahertz, GHz), may be performed on a spectrum above 6 GHz, or may be performed on both the spectrum below 6 GHz and the spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. The function of the terminal may be performed by a module (for example, a chip or a modem) in the terminal, or may be performed by an apparatus including the function of the terminal.

FIG. 1b is another diagram of a communication system according to an embodiment of this application. In FIG. 1b, an example in which a network device is a base station is used for description, and both a device 1 and a device 2 are terminal devices. As shown in FIG. 1b, a communication link between the device 1 and the device 2 may be referred to as a sidelink (sidelink, SL), and a communication link between the device 1 (or the device 2) and the base station may be referred to as an uplink-downlink, including an uplink (uplink) and a downlink (downlink). It can be learned that the sidelink is a communication mechanism in which different terminal devices directly communicate with each other without using the network device.

Optionally, on the sidelink (sidelink, SL), usually, a transmit device and a receive device may be terminal devices or network devices of a same type, or may be a road side unit (road side unit, RSU) and a terminal device. From a perspective of a physical entity, the RSU is a road side station or a road side unit. From a perspective of a function, the RSU may be a terminal device, or may be a network device. This is not limited in this application. That is, the transmit device is a terminal device, and the receive device is also a terminal device; the transmit device is a road side station, and the receive device is also a terminal device; or the transmit device is a terminal device, and the receive device is also a road side station. In addition, the sidelink may alternatively be a link between base station devices of a same type or different types. In this case, a function of the sidelink is similar to that of a trunk link, but an air interface technology used by the sidelink may be the same as or different from that used by the trunk link.

For example, broadcast, unicast, and multicast are supported on the sidelink.

When a terminal device (for example, a device 1) directly communicates with another terminal device (for example, a device 2) without a network device, the two terminal devices may communicate with each other through a proximity-based services communication 5 (proximity-based services communication 5, PC5) interface.

A typical application of the sidelink is V2X communication. The V2X communication uses and enhances current cellular network functions and elements, to implement low-latency and high-reliability communication between various nodes in a vehicle network, including vehicle-to-vehicle (Vehicle-to-Vehicle, V2V for short) communication, vehicle-to-pedestrian (Vehicle-to-Pedestrian, V2P for short) communication, vehicle-to-infrastructure (Vehicle-to-Infrastructure, V2I for short) communication, and vehicle-to-network (Vehicle-to-Network, V2N for short) communication.

The technical solutions provided in this application may be applied to a wireless communication system (for example, the system shown in FIG. 1a or FIG. 1b). For example, an AI network element may be introduced into the communication system provided in this application to implement some or all AI-related operations. The AI network element may also be referred to as an AI node, an AI device, an AI entity, an AI module, an AI model, an AI unit, or the like. The AI network element may be built in a network element in a communication system. For example, the AI network element may be an AI module built in a terminal device, an access network device, a core network device, a cloud server, or operations, administration and maintenance (operations, administration and maintenance, OAM), to implement an AI-related function. The OAM may be used as a network management system of the core network device and/or a network management system of the access network device. Alternatively, the AI network element may be an independently disposed network element in the communication system. Optionally, the terminal or the chip built in the terminal may alternatively include the AI entity, configured to implement an AI-related function.

The following briefly describes artificial intelligence (artificial intelligence, AI) that may be used in this application.

The artificial intelligence (artificial intelligence, AI) may enable machines to have human intelligence, for example, can enable the machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. The process of training a machine learning model is a process of learning the mapping relationship. During training, a sample value is input into the model to obtain a predicted value of the model, and a model parameter is optimized by calculating an error between the predicted value of the model and a sample label (ideal value). After learning of the mapping relationship is completed, a new sample label may be predicted by using the learned mapping. The mapping relationship learned through the supervised learning may include linear mapping or non-linear mapping. A learning task may be classified into a classification task and a regression task based on a type of a label.

In terms of unsupervised learning, an internal pattern of a sample is explored autonomously by using an algorithm based on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of a model and a sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from the supervised learning and the unsupervised learning, the reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a better (for example, an optimal) decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of datasets and a mapping relationship between data may be established, to obtain performance better than that of a conventional modeling method.

An idea of the neural network comes from a neuron structure of brain tissue. For example, each neuron performs a weighted summation operation on input values of the neuron, and outputs an operation result by using an activation function.

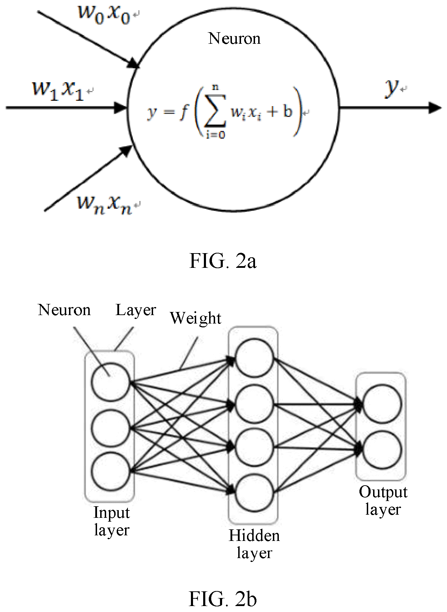

FIG. 2a is a diagram of a neuron structure. It is assumed that an input of a neuron is *x* = [*x*₀, *x*₁, ... , *xₙ*], and corresponding weights are *w* = [w, *w*₁, ... , *wₙ*], where n is a positive integer, and *wᵢ* and *xᵢ* may be various possible types such as decimals, integers (for example, 0, positive integers, or negative integers), or complex numbers. *wᵢ* weights *xᵢ*. A bias, for example, b, is used for weighted summation on input values. The activation functions may take various forms. For example, if an activation function of a neuron is y = *f*(*z*) = max (0, *z*), the output is $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$ . Alternatively, if an activation function is y = *f*(*z*) = *z*, the output is $y = f \left({\sum }_{i = 0}^{i = n} {w}_{i} ∗ {x}_{i} + b\right) = {\sum }_{i = 0}^{i = n} {w}_{i} ∗ {x}_{i} + b$. b may be various possible types such as decimals, integers (for example, 0, positive integers, or negative integers), or complex numbers. Activation functions of different neurons in the neural network may be the same or different.

The neural network usually includes a plurality of layers, and each layer may include one or more neurons. Increasing the depth and/or width of the neural network increases the expressive capability of the neural network, providing powerful information extraction and abstraction for complex systems. Depth refers to a quantity of layers included in the neural network, and width refers to a quantity of neurons included at each layer. In an implementation, a neural network includes an input layer and an output layer. The input layer performs neuron processing on received input information and passes the processing result to the output layer, which outputs the final result. In another implementation, a neural network includes an input layer, a hidden layer, and an output layer. The input layer performs neuron processing on received input information and passes the processing result to the hidden layer. The hidden layer performs calculation on the received processing result and then passes the calculation result to the output layer or a next adjacent hidden layer. The output layer outputs the final result. A neural network may include one hidden layer or a plurality of hidden layers that are sequentially connected. This is not limited.

The neural network is, for example, a deep neural network (deep neural network, DNN). Based on a network construction manner, the DNN may include a feedforward neural network (feedforward neural network, FNN), a convolutional neural network (convolutional neural network, CNN), and a recurrent neural network (recurrent neural network, RNN).

FIG. 2b is a diagram of an FNN network. In an FNN network, neurons at adjacent layers are fully connected, requiring substantial storage space and incurring high computing complexity.

The CNN is a neural network dedicated to processing grid-like data, such as time series data (discrete temporal sampling) and image data (two-dimensional discrete sampling). The CNN performs a convolution operation by capturing partial information through a fixed-size window, instead of performing an operation on all input information simultaneously. greatly reducing the calculation amount of model parameters. In addition, based on different types of information captured through windows (for example, a person and an object in a same image are information of different types), different convolution kernel operations may be used for the windows, enabling better feature extraction.

The RNN is a DNN network using feedback time series information. Inputs of the RNN include the current input and the previous output. The RNN is suitable for capturing temporally correlated sequential features and is ideal for applications such as speech recognition and channel encoding and decoding.

In the foregoing model training process of machine learning, a loss function can be defined to describe the gap or the difference between model outputs and target values. The loss function may be expressed in a plurality of forms, and a specific form of the loss function is not limited. The model training process involves adjusting some or all of model parameters to minimize the loss function below a threshold or to meet target requirements.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model deduction (also referred to as model inference, inference, prediction, or the like), model monitoring or model verification, inference result release, or the like. The AI function may also be referred to as an AI (AI-related) operation or an AI-related function.

The following describes an example of an implementation process of a neural network with reference to the accompanying drawings.

### 1. Fully connected neural network, also referred to as a multilayer perceptron (multilayer perceptron, MLP)

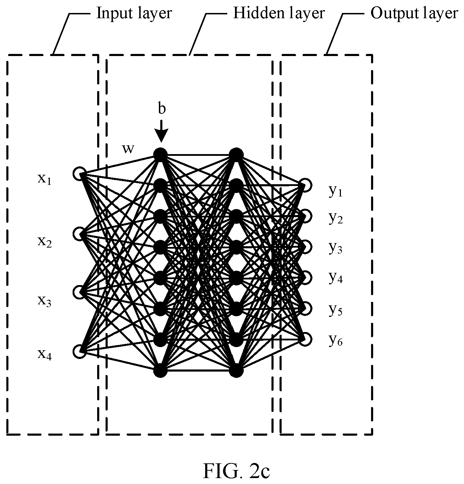

As shown in FIG. 2c, one MLP includes one input layer (left side), one output layer (right side), and a plurality of hidden layers (middle). Each layer of the MLP includes several nodes, which are referred to as neurons. Neurons at two adjacent layers are connected to each other in pairs.

Optionally, in consideration of neurons at two adjacent layers, an output h of a neuron at a lower layer is a weighted sum of all neurons x at an upper layer connected to the neuron at the lower layer, and may be expressed, by using an activation function, as: $h = f \left(wx+b\right)$

Herein, ***w*** is a weight matrix, ***b*** is a bias vector, and f is the activation function.

Further, optionally, an output of the neural network may be recursively expressed as: $y = {f}_{n} \left({w}_{n}{f}_{n - 1}\left(…\right)+{b}_{n}\right)$

n is an index of the neural network layer, 1≤n≤N, and N is a total quantity of layers of the neural network.

In other words, the neural network may be understood as a mapping relationship from an input dataset to an output dataset. The neural network is usually initialized randomly, and a process of obtaining the mapping relationship from random ***w*** and ***b*** based on existing data is referred to as training of the neural network.

Optionally, a specific training manner is to evaluate an output result of the neural network by using a loss function (loss function).

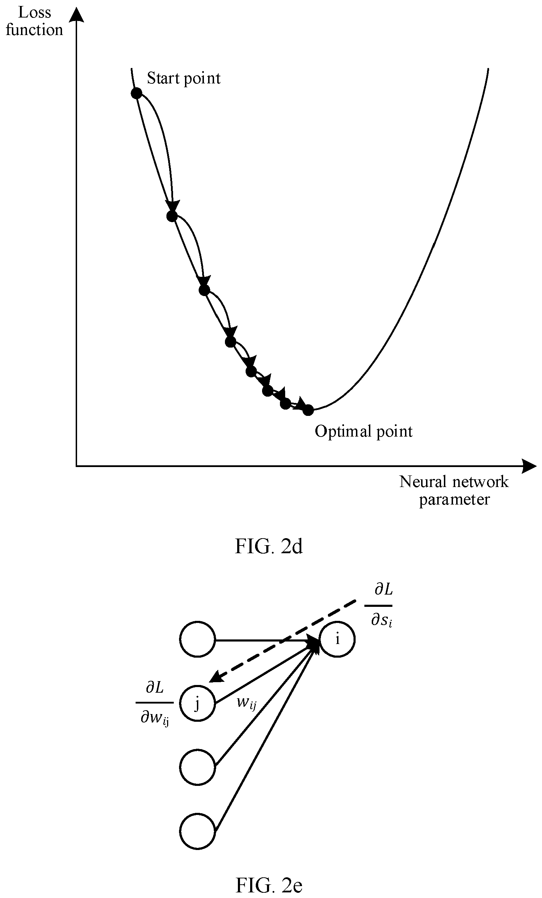

As shown in FIG. 2d, errors may be backpropagated, and neural network parameters (including ***w*** and ***b***) can be iteratively optimized by using a gradient descent method, until the loss function reaches a minimum value, namely, "a better point (for example, an optimal point)" in FIG. 2d. It may be understood that the neural network parameter corresponding to "the better point (for example, the optimal point)" in FIG. 2d may be used as a neural network parameter in trained AI model information.

Further, optionally, a gradient descent process may be expressed as: $θ ← θ - η \frac{\partial L}{\partial θ}$

***θ*** is a to-be-optimized parameter (including ***w*** and ***b***), L is a loss function, *η* is a learning rate for controlling a gradient descent step, ∂ represents a derivation operation, and $\frac{\partial L}{\partial θ}$ represents taking a derivative of *L* with respect to ***θ***.

Further, optionally, a backpropagation process uses a chain rule for obtaining a partial derivative.

As shown in FIG. 2e, a gradient of a parameter at a previous layer may be obtained through recursive calculation of a gradient of a parameter at a next layer, and may be expressed as: $\frac{\partial L}{\partial {w}_{i j}} = \frac{\partial L}{\partial {s}_{i}} \frac{\partial {s}_{i}}{\partial {w}_{ij}}$

wᵢⱼ is a weight of a node i connected to a node j, and sᵢ is an input weighted sum of the node i.

### 2. Federated learning (Federated Learning, FL)

A concept of the federated learning is proposed to effectively resolve difficulties faced by current development of artificial intelligence. While ensuring user data privacy and security, the federated learning facilitates various edge devices and a server at a central end to collaborate to efficiently complete a learning task of a model.

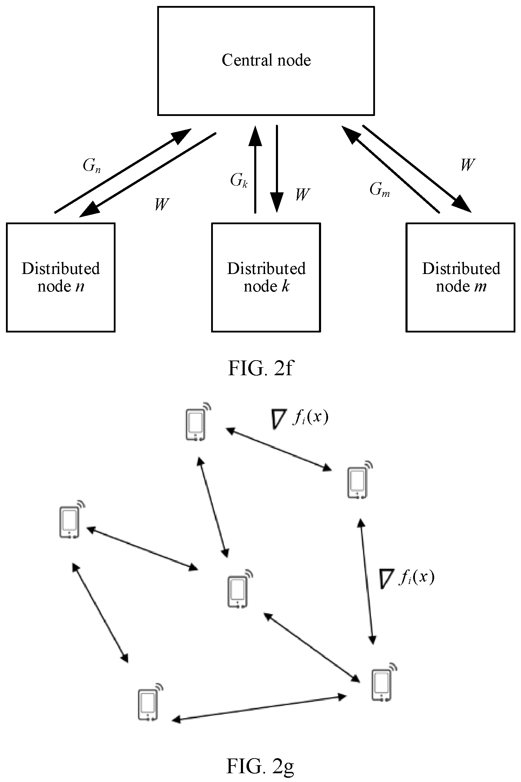

As shown in FIG. 2f, an FL architecture is a training architecture in a current FL field. For example, a FedAvg algorithm is a basic algorithm of the FL, and an algorithm procedure of the FedAvg algorithm is roughly as follows:
(1) A central end initializes a to-be-trained model ${w}_{g}^{0}$, and broadcasts and sends the model to all client devices.
(2) In a (*t* ∈ [1, *T*])^{th} round, a client *k* ∈ [1, *K*] performs training on a received global model ${w}_{g}^{t - 1} E$ times of epochs based on a local dataset 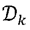 to obtain a local training result ${w}_{k}^{t}$, and reports the local training result to the central node.
(3) The central node summarizes and collects local training results from all (or some) clients. It is assumed that a set of clients that upload a local model in a *t*^{th} round is 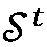 . The central end performs weighted averaging by using a quantity of samples of a corresponding client as a weight to obtain a new global model, and a specific update rule is ${w}_{g}^{t} = {\sum }_{k ∈ {S}^{t}} \frac{{D}_{k} {w}_{k}^{t}}{{\sum }_{k ∈ {S}^{t}} {D}_{k}}$. Then, the central end broadcasts and sends a global model ${w}_{g}^{t}$ of a latest version to all client devices for a new round of training.
(4) Steps (2) and (3) are repeated until the model converges finally or a quantity of training rounds reaches an upper limit.

In addition to reporting the local model ${w}_{k}^{t}$, a local gradient ${g}_{k}^{t}$ obtained through training may also be reported. The central node calculates an average of the local gradient, and updates the global model based on a direction of the average gradient.

It can be learned that, in an FL framework, a dataset exists on a distributed node. To be specific, the distributed node collects a local dataset, performs local training, and reports, to the central node, a local result (a model or a gradient) obtained through training. The central node does not have a dataset, is only responsible for fusing training results of distributed nodes to obtain a global model, and delivers the global model to the distributed nodes.

### 3. Decentralized learning Unlike the federated learning, another distributed learning architecture is the decentralized learning.

As shown in FIG. 2g, a fully distributed system without a central node is considered. A design objective () of a decentralized learning system is usually an average value of targets *fᵢ*(*x*) of all nodes, that is, $f \left(x\right) = \frac{1}{n} {\sum }_{i = 1}^{n} {f}_{i} \left(x\right)$ , where *n* is a quantity of distributed nodes, *x* is a to-be-optimized parameter, and in machine learning, *x* is a parameter of a machine learning (for example, a neural network) model. Each node calculates a local gradient *∇fᵢ*(*x*) by using local data and a local target *fᵢ*(*x*), and then sends the local gradient to an adjacent node that is reachable in communication. After receiving gradient information sent by an adjacent node of any node, the node may update a parameter *x* of a local model according to the following formula: ${x}_{i}^{k + 1} = {x}_{i}^{k} - {α}_{k} \left(\frac{1}{\left|{N}_{i}\right|}{\sum }_{j ∈ {N}_{i}} ∇ {f}_{j} \left({x}_{j}^{k}\right)\right)$${x}_{i}^{k + 1}$ represents a parameter that is of the local model and that is obtained through a (k+1)^{th} (k is a natural number) time of updating in an *i*^{th} node, ${x}_{i}^{k}$ represents a parameter that is of the local model and that is obtained through a k^{th} time of updating in the *i*^{th} node (if k is 0, it represents that ${x}_{i}^{k}$ is a parameter that is of the local model and that exists before updating in the *i*^{th} node), *αₖ* represents an optimization coefficient, *Nᵢ* is a set of adjacent nodes of the node *i*, and |*Nᵢ*| represents a quantity of elements in the set of adjacent nodes of the node *i*, namely, a quantity of adjacent nodes of the node *i*. Through information exchange between nodes, the decentralized learning system will finally learn a unified model.

The technical solutions provided in this application may be applied to a wireless communication system (for example, the system shown in FIG. 1a or FIG. 1b). In the wireless communication system, a communication node usually has a signal receiving and sending capability and a computing capability. A network device having a computing capability is used as an example. The computing capability of the network device is mainly for providing computational power support for a signal receiving and sending capability (for example, performing sending processing and receiving processing on a signal), to implement a communication task between the network device and another communication node.

In a communication network, in addition to the computing capability for providing computational power support for the foregoing communication task, a communication node may further have surplus computing capabilities. How to use these surplus computing capabilities is a critical technical challenge.

In a possible implementation, the communication node may be used as a participant node of an AI learning system, and a computational power of the communication node is applied to a phase of the AI learning system. With advent of the large model era, deep learning models with massive parameters, for example, a bidirectional encoder representations from transformers (bidirectional encoder representations from transformers, BERT) or a generative pre-trained transformer (generative pre-trained transformer, GPT), can complete increasingly complex tasks and achieve good performance. However, for a large model, even an inference process of the model is limited by a device capacity. Therefore, the large model is usually stored on a cloud central server. In addition, each device in a network generates a large amount of raw data every day, and the data requires the large model to be invoked a plurality of times for inference. Usually, the device (for example, the communication node) may send data to a central server, the central server performs inference based on the data, and then the central server returns an inference result to the device. This process consumes a large quantity of communication resources for data transmission, and privacy of device data is at risk.

A scholar proposes a distributed inference technology of the deep neural network, to better reduce communication overheads and protect user data privacy. The model is distributed to the device, and a local computational power of the device is used to perform inference based on the model, to reduce communication overheads and obtain data privacy preserving. However, in a communication system, currently, there is no related document to provide a solution of how to determine (for example, how to generate and how to update) an AI model used by a communication node.

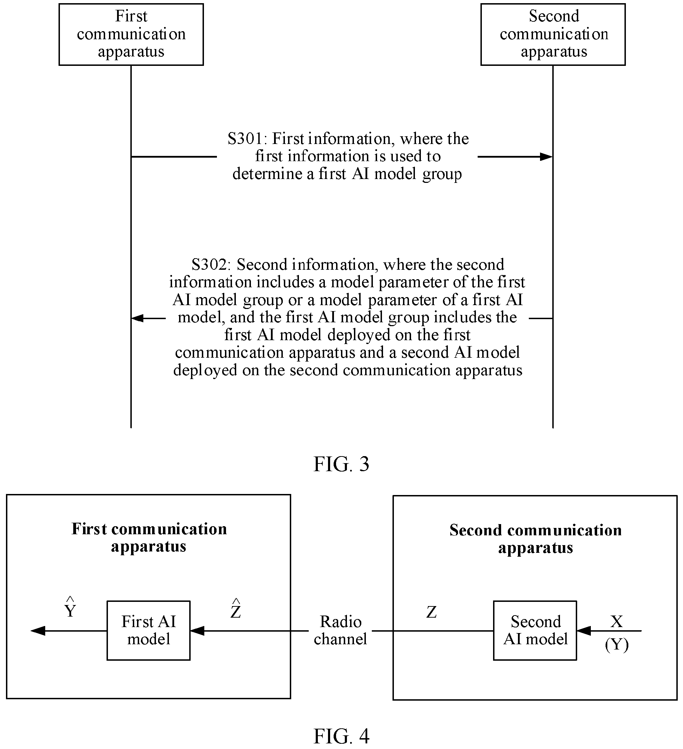

FIG. 3 is a diagram of an implementation of a communication method according to this application. The method includes the following steps.

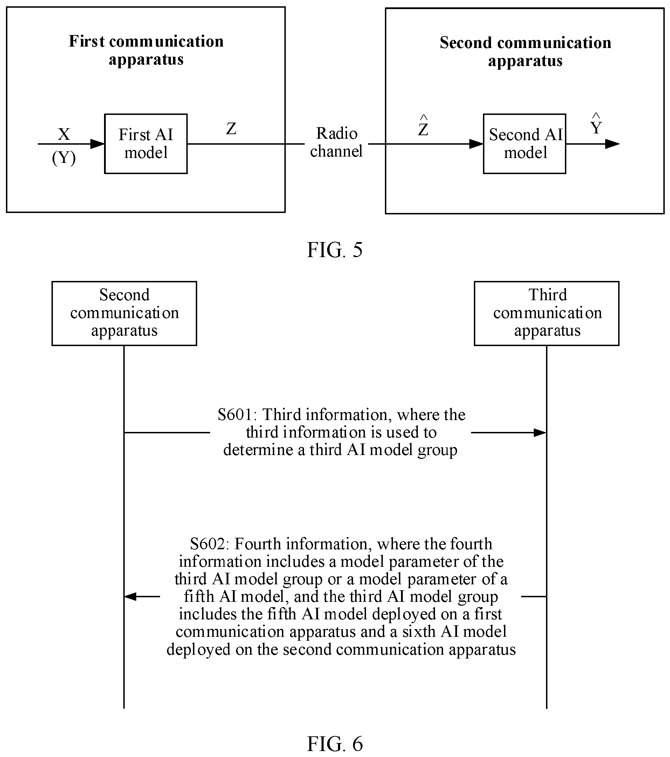

It should be noted that, in FIG. 3, an example in which a first communication apparatus and a second communication apparatus (a second communication apparatus and a third communication apparatus in FIG. 6) are used as execution bodies in the interaction diagram is used to illustrate the method. However, the execution bodies in the interaction diagram are not limited in this application. For example, in FIG. 3 and FIG. 6 below, an execution body of the method may be replaced with a chip, a chip system, a processor, a logical module, software, or the like in the communication apparatus. In FIG. 3, the first communication apparatus may be a network device, and the second communication apparatus may be a terminal device. Alternatively, both the first communication apparatus and the second communication apparatus are terminal devices (for example, the method may be applied to a process of communication between different terminal devices in a sidelink communication scenario).

S301: The first communication apparatus sends first information, and correspondingly, the second communication apparatus receives the first information. The first information is used to determine a first AI model group, and the first AI model group includes a first AI model and a second AI model. The first AI model is deployed on the first communication apparatus, and the second AI model is deployed on the second communication apparatus; and an input of the first AI model includes an output of the second AI model, or an input of the second AI model includes an output of the first AI model.

S302: The second communication apparatus sends second information, and correspondingly, the first communication apparatus receives the second information. The second information includes a model parameter of the first AI model group or a model parameter of the first AI model.

In this application, terms such as an AI model, a neural network model, an AI neural network model, a machine learning model, and an AI processing model may be replaced with each other.

It should be understood that the first information sent by the first communication apparatus in step S301 is used to determine the first AI model group. That the first AI model group includes a first AI model and a second AI model may be understood as that a function of the first AI model group is implemented through at least model processing of the first AI model and model processing of the second AI model. In other words, after receiving the second information, the first communication apparatus may deploy the first AI model in the first communication apparatus via the model parameter of the first AI model group or the model parameter of the first AI model included in the second information, and perform model processing on the first AI model. Correspondingly, the second communication apparatus may perform model processing on the second AI model deployed on the second communication apparatus. Optionally, the model processing may include one or more of model update processing, model training processing, and model inference processing.

It should be understood that transmission of wireless communication signals (for example, receiving and sending of configuration information of a communication resource and receiving and sending of a reference signal) may be performed between different communication apparatuses (for example, the first communication apparatus and the second communication apparatus).

Optionally, the AI models (for example, the first AI model, the second AI model, and the following third to sixth AI models) in this application may be used for management (including at least one of configuration, update, and optimization) of the wireless communication signal. For example, the AI model may include one or more of an AI model used for modulation and/or demodulation, an AI model used for channel prediction, an AI model used for beam management, an AI model used for assisted positioning, an AI model used for channel compression, an AI model used for resource scheduling, and an AI model used for replacing one or more modules in a transmitter and/or a receiver. Alternatively, the AI model in this application may be an AI model used for another AI task, for example, an AI model used for image recognition, an AI model used for natural language processing, or an AI model used for computer vision.

Optionally, when the first AI model group is considered as one AI model, the first AI model and the second AI model may be understood as two AI submodels in the AI model.

In this application, that one AI model is deployed on one communication apparatus (for example, the first AI model is deployed on the first communication apparatus, and the second AI model is deployed on the second communication apparatus) may be understood as that after obtaining a model parameter of the AI model, the communication apparatus obtains/generates/constructs the AI model based on the model parameter of the AI model, and the communication apparatus may subsequently perform model processing on the AI model.

Optionally, the model parameter may include one or more of a hyperparameter of the model, a dataset of the model (including input data of the model and label data corresponding to the input data), and a structure parameter of the model.

Optionally, one AI model group may include two or more AI models. For example, in addition to the first AI model and the second AI model, the first AI model group may further include another AI model. The another AI model may be deployed on another communication apparatus different from the first communication apparatus and the second communication apparatus. This is not limited herein.

In a possible implementation, the second communication apparatus is a functional entity that determines, based on the first information, an AI model group list, where the AI model group list includes one or more AI model groups, and the one or more AI model groups include the first AI model group. Specifically, the second communication apparatus may communicate with one or more first communication apparatuses, and the second communication apparatus may receive information (for example, one or more pieces of first information) from the one or more first communication apparatuses, to generate/obtain/determine one or more AI model groups. In other words, the second communication apparatus may collect information and generate a model based on the collected information. Subsequently, the second communication apparatus may deploy an AI model in one or more first communication apparatuses.

Optionally, the AI model group list may include one or more AI model groups, and each AI model group may include two or more AI models. As described above, a relationship between the AI model group and the AI model may also be understood as a relationship between the AI model and the AI submodel. Therefore, the AI model group list may alternatively be replaced with an AI model list. That is, the AI model list may include one or more AI models.

Optionally, the list may be replaced with another term like a set, a dictionary, a combination, space, or the like.

Optionally, that the second communication apparatus is a functional entity that determines, based on the first information, an AI model group list, includes: The second communication apparatus is a functional entity that determines, based on the first information, the AI model group list, and selects, from the AI model group list, part or all of AI model groups to be used by the first communication apparatus. Specifically, after the second communication apparatus determines the AI model group list based on the first information, a function implemented by the second communication apparatus may further include: selecting, from the AI model group list, the part or all of the AI model groups used by the first communication apparatus. In other words, in addition to collecting the information and generating the model based on the collected information, the second communication apparatus may further perform model selection, so that the second communication apparatus can subsequently deploy, in one or more first communication apparatuses, an AI model adapted to the one or more first communication apparatuses.

For ease of understanding, the following describes, by using examples shown in FIG. 4 and FIG. 5, an example of the AI models deployed on the first communication apparatus and the second communication apparatus.

In the example shown in FIG. 4, the first AI model is deployed on the first communication apparatus, the second AI model is deployed on the second communication apparatus, and the input of the first AI model deployed on the first communication apparatus includes the output of the second AI model deployed on the second communication apparatus. In this example, an example in which input data of the second AI model is X is used. Through processing of the second AI model, the second communication apparatus may obtain and send data Z; and through transmission on a radio channel, data received by the first communication apparatus is represented as *Ẑ* (it may be understood that due to interference such as a transmission path loss and noise on the radio channel, Ẑ may be different from Z, and Ẑ may be understood as an estimated value of Z, a measured value of Z, or the like). Then, the first communication apparatus may use the data Ẑ as the input of the first AI model, and obtain data Ŷ through processing of the first AI model.

In the example shown in FIG. 5, the first AI model is deployed on the first communication apparatus, the second AI model is deployed on the second communication apparatus, and the input of the second AI model includes the output of the first AI model. In this example, an example in which input data of the first AI model is X is used. Through processing of the first AI model, the first communication apparatus may obtain and send data Z; and through transmission on a radio channel, data received by the second communication apparatus is represented as Ẑ. Then, the second communication apparatus may use the data Ẑ as the input of the second AI model, and obtain data Ŷ through processing of the second AI model.

It may be understood that the first communication apparatus and the second communication apparatus may be implemented in a plurality of manners.

For example, the second communication apparatus may be a terminal device. Correspondingly, the first communication apparatus and the second communication apparatus may communicate with each other on a sidelink (sidelink, SL). In this case, the first AI model and the second AI model may be referred to as an end-to-end model, an end-to-end collaborative model, or the like.

For another example, the second communication apparatus may be a network device (for example, an access network device). Correspondingly, the first communication apparatus and the second communication apparatus may communicate with each other on uplink and downlink communication links. In this case, the first AI model and the second AI model may be referred to as an edge-end model, an edge-end collaborative model, an end-edge model, an end-edge collaborative model, or the like. For example, when the first communication apparatus is a terminal device and the second communication apparatus is an access network device, the scenario shown in FIG. 4 may be understood as end-edge collaboration implemented based on a downlink scenario, and the scenario shown in FIG. 5 may be understood as end-edge collaboration implemented based on an uplink scenario.

It should be noted that, in FIG. 4 and FIG. 5, data Y may be label data corresponding to the data X, and association relationships between the label data Y and the processing results Ŷ of the first AI model and the second AI model may be used to detect or determine processing performance of the first AI model and the second AI model. For example, the association relationships may be determined by using gradient information, a loss function, or the like.

It can be learned from the implementation process shown in FIG. 3 that, for the second communication apparatus, after receiving the first information in step S301, the second communication apparatus may perform a model generation process based on the first information, to obtain the first AI model group. The following describes an example of a process in which the second communication apparatus determines the first AI model group based on the first information.

First, the theoretical basis for generating the AI model is described through Manner A.

Usually, in a network for conventional connections or sessions, the design goal between different communication devices (receiver and transmitter) is to ensure that the receiver accurately recovers all data sent by the transmitter, that is, lossless data transmission. However, in future intelligent networks, due to existence of massive data and various AI task objectives, it is possible that full data transmission is no longer needed, but transmission of data valuable for AI tasks is needed. Therefore, in the network, it is possible to minimize wireless data transmission while optimizing AI model performance (for example, maximizing accuracy). To achieve this, in the examples shown in FIG. 4 and FIG. 5, AI model performance may be represented based on mutual information between different data.

In an implementation example, in FIG. 4 and FIG. 5, input data X of the AI model, label data Y corresponding to the input data X, and data Ẑ received by a receiver (for example, the first communication apparatus in FIG. 4 or the second communication apparatus in FIG. 5) meet Manner A: ${L}_{IB} = - I \left(\hat{Z}; Y\right) + βI \left(X; \hat{Z}\right)$

I(a; b) represents the amount of mutual information between variables a and b. Specifically, I(Ẑ; Y) represents mutual information between the radio channel-transmitted data Ẑ and the label data Y (the correct/expected result of an AI task). A larger amount of the mutual information means more information about the label data Y included in the radio channel-transmitted data Ẑ, which may be understood as higher AI model accuracy and better model performance. I(X; Ẑ) represents the amount of mutual information between the original input data X and the radio link data Ẑ. A smaller amount of mutual information indicates less data transmitted on a radio link, that is, lower wireless communication overheads. The configurable parameter β (a value range of β may be [0, 1]) may be used to control the proportion between two pieces of mutual information. Therefore, minimizing the foregoing formula 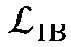 maximizes AI processing correctness while minimizing wireless communication overheads. The subscript "IB" of 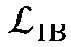 represents information bottleneck (information bottleneck, IB) theory (or a distributed information bottleneck (distributed information bottleneck), a deterministic information bottleneck (deterministic information bottleneck), another information theory, or the like). In other words, 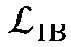 may be replaced with another symbol. This is merely an implementation example.

Based on Manner A, basis for model generation may include one or more of the following data A to data C. In other words, an AI model group may be generated based on the following data A to data C (for example, the second communication apparatus may generate the first AI model group). The data A to the data C are described below.

Data A: M data-label pairs ${\left\{\left({x}_{m}, {y}_{m}\right)\right\}}_{m = 1}^{M}$ used as input data (M is the batch size (batch size) of batch data, xₘ is input data of the m^{th} pair of data, and yₘ is label data of the m^{th} pair of data).

Data B: a dimension of data transmitted on the radio link (for example, Ẑ or Z in FIG. 4 or FIG. 5). For example, the dimension of the data may be represented as a quantity of tokens/words/marks (tokens) (the tokens are uniformly used hereafter), or the dimension of the data may be represented as an embedding (embedding) vector. It may be understood that a token is similar to a "word", and may be understood as a basic unit for splitting an intermediate transmission amount. Embedding is a vector representation of the intermediate transmission amount. Each token may be understood as a composition unit in the embedding vector, that is, a quantity of composition units in the embedding is the token dimension.

### Data C: channel state information.

Optionally, AI model group generation based on the one or more of the data A to the data C may use a neural network. In other words, the neural network inputs one or more of the data A to the data C and processes them to obtain a model parameter of an AI model group.

In an implementation example, a loss function of the neural network may be represented as Manner B: $min {L}_{IB} = - I \left(\hat{Z}; Y\right) + βI \left(X; \hat{Z}\right)$

In another implementation example, to reduce solving complexity of 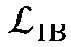 , calculation of the mutual information amount of variational processing may be introduced. For example, a loss function of the neural network may be expressed as Manner C: ${L}_{VIB} \left(ϕ, θ\right) = {E}_{p \left(x, y\right)} \left\{{E}_{{p}_{ϕ} \left(\left.\hat{z}\right|x\right)}\left[-log {q}_{θ}\left(\left.y\right|\hat{z}\right)\right]+β{D}_{KL}\left({p}_{ϕ}\left(\left.\hat{z}\right|x\right)\left‖q\left(\hat{z}\right)\right.\right)\right\}$

A subscript "VIB" of 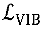 represents a variational information bottleneck (variational information bottleneck);
ϕ represents a neural network or a model parameter arranged on the user side (for example, the first communication apparatus);
θ represents a neural network or a model parameter arranged on the base station side (for example, the second communication apparatus);
β represents a Lagrange multiplier, for balancing AI processing accuracy and wireless communication overheads;
P represents a conditional probability density of ẑ when x is given;
q represents a variational probability density of ẑ, and
p and q actually represent different probability density functions.
${E}_{p \left(x, y\right)} \left\{⋅\right\}$ represents calculating the expected/average value of a part in {-} on the premise that a probability density function p(x, y) is known.${E}_{{p}_{ϕ} \left(\left.\hat{Z}\right|x\right)} \left\{⋅\right\}$ represents calculating the expected/average value of a part in {-} on the premise that a probability density function p_{ϕ}(*ẑ*|x) is known.

q_{θ}(y|ẑ) represents a conditional probability distribution with a parameter θ, and is a variational distribution form of an approximate conditional probability p(y|ẑ).

p_{ϕ}(21x) represents a conditional probability distribution with a parameter ϕ.

q(ẑ) represents a variational distribution form of an approximate probability distribution p(2).

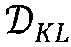 (p_{ϕ}(ẑ|x)∥q(ẑ)) represents a Kullback-Leibler (Kullback-Leibler, KL) divergence between the probability distribution p_{ϕ}(ẑ|x) and the probability distribution q(2).

In another implementation example, on the premise that a tokens/embedding dimension is subject to a radio link bandwidth constraint, a loss function of the neural network may be represented as Manner D: $max I \left(\hat{Z}; Y\right) , s . t . I \left(X; \hat{Z}\right) \leq Th _ 1$

s. t. I(X; Ẑ) ≤ Th_1 indicates that the constraint condition is I(X; Ẑ) ≤ Th_1, Th_1 represents the maximum radio link bandwidth threshold, and the physical meaning of the constraint condition I(X; Ẑ) ≤ Th_1 is that the amount of data transmitted on the radio link meets an air interface bandwidth constraint. In other words, in Manner D, accuracy of the AI task can be maximized on the premise that radio channel transmission information meets the bandwidth constraints.

In another implementation example, on the premise that a tokens/embedding dimension is subject to a radio link bandwidth constraint, a loss function of the neural network may be expressed as Manner E: $min I \left(X; \hat{Z}\right) , s . t . I \left(\hat{Z}; Y\right) \geq Th _ 2$

s. t. I(Ẑ; Y) ≥ Th_2 indicates that a constraint condition is (Ẑ; Y) ≥ Th_2, Th_2 represents a minimum threshold of accuracy of the AI task, and a physical meaning of the constraint condition (Ẑ; Y) ≥ Th_2 is that the accuracy of the AI task is greater than the minimum threshold. In other words, in Manner E, an amount of information transmitted on the radio channel can be minimized when accuracy of the AI task is greater than a minimum threshold.

Based on the foregoing implementation process, on the premise that the tokens/embedding dimension is subject to the bandwidth constraint, inference accuracy of the obtained AI model is high. For example, based on different datasets, a simulation result obtained in Manner C is as follows: a test on a Canadian Institute for Advanced research (Canadian Institute for Advanced Research, CIFAR) dataset: training epoch (epoch)=319, intermediate output dimension (intermediate dim)=20, and accuracy (accuracy)=92.37%; and
a test on a National Institute of Standards and Technology (mixed national institute of standards and technology database, MNIST) dataset: epoch=400, intermediate dim=64, and accuracy=97.62%.

The intermediate output dimension is a dimension of Z/Ẑ, and the accuracy is accuracy of the AI task.

It can be learned from the foregoing descriptions that the first information sent by the first communication apparatus in step S301 may be used to determine the first AI model group. Based on the parameters in the process shown in Manner A to Manner E, the first information may include one or more of the following information A to information E. In other words, the second communication apparatus may obtain, via the one or more of the information A to the information E included in the following first information, the parameters needed in Manner A to Manner D, and generate the first AI model group in one of Manner A to Manner E.

Information A: first dimension information. When the input of the first AI model includes the output of the second AI model, the first dimension information is used to determine dimension information of input data of the first AI model or dimension information of output data of the second AI model.

Information B: second dimension information. When the input of the second AI model includes the output of the first AI model, the second dimension information is used to determine dimension information of output data of the first AI model or dimension information of input data of the second AI model.

Information C: input data of the first AI model and label data of the input data of the first AI model.

Information D: local computational power status information of the first communication apparatus.

Information E: channel state information.

For the information A or the information B, the second communication apparatus may determine, via the first information, dimension information of data transmitted on the communication link. For example, the dimension information may be a quantity of tokens (tokens) or a dimension of an embedding (embedding) vector. When a communication bandwidth between the first communication apparatus and the second communication apparatus is fixed, because a dimension of the data transmitted on the communication link is associated with processing performance of the AI model, an implementation process in which the second communication apparatus determines the first AI model group can be simplified in this manner, so that processing performance of the AI model included in the first AI model group can also be improved while complexity of the second communication apparatus is reduced.

Optionally, the dimension information includes at least one of the following: an upper limit value of a dimension, a lower limit value of the dimension, the dimension expected by the first communication apparatus (or the dimension not expected by the first communication apparatus), and a value range of the dimension expected by the first communication apparatus (or a value range of the dimension not expected by the first communication apparatus).

For example, when the dimension information includes the upper limit value of the dimension and/or the lower limit value of the dimension, the second communication apparatus may use, as one of bases for determining the AI model, a range indicated by the upper limit value and/or the lower limit value, so that flexibility of implementing the solution can be improved.

For another example, when the dimension information includes the dimension expected by the first communication apparatus and/or the value range of the dimension expected by the first communication apparatus, the AI model determined by the second communication apparatus based on the dimension information can meet an expectation of the first communication apparatus.

Optionally, in the information A or the information B, the first dimension information or the second dimension information is determined based on channel state information (channel state information, CSI). Specifically, the first dimension information or the second dimension information included in the first information may be determined based on the channel state information, so that the first dimension information or the second dimension information can reflect a channel feature of a radio channel between the first communication apparatus and the second communication apparatus to some extent. In this way, the AI model that may be subsequently obtained based on the first information can be adapted to the channel feature of the radio channel, to improve transmission performance of AI data corresponding to the AI model. In addition, when the AI model obtained based on the first information can be adapted to the channel feature of the radio channel, the data transmitted on the radio link can also meet a channel bandwidth requirement as much as possible, so that model performance of the AI model included in the first AI model group is improved.

Optionally, the channel state information may include information about a channel from the first communication apparatus to the second communication apparatus, and/or information about a channel from the second communication apparatus to the first communication apparatus. When the first communication apparatus is a terminal device and the second communication apparatus is a network device, the information about the channel from the first communication apparatus to the second communication apparatus may be understood as uplink channel information, and the information about the channel from the second communication apparatus to the first communication apparatus may be understood as downlink channel information.

Optionally, the channel state information may be obtained based on a reference signal.

For example, when the first communication apparatus and the second communication apparatus communicate with each other over a sidelink, the reference signal may include a sidelink synchronization signal/physical broadcast channel block (sidelink synchronization signal/physical broadcast channel block, sidelink SSB, SL-SSB, or S-SS/PSBCH block), a sidelink channel state information reference signal (sidelink channel state information reference signal, SL-CSI-RS), and the like.

For another example, when the first communication apparatus and the second communication apparatus communicate with each other over an uplink and a downlink, the reference signal may include a channel state information reference signal (channel state information reference signal, CSI-RS), a sounding reference signal (sounding reference signal, SRS), and the like.

For the information C, when the first information includes the input data of the first AI model and the label data of the input data of the first AI model, because the input data may be used as the input of the first AI model, and the label data may be used as one of bases for determining model processing performance of the first AI model, for the second communication apparatus, the second communication apparatus may obtain an AI model with good performance based on the two items of information.

In addition, for the second communication apparatus, the second communication apparatus may implement mutual information-based mathematical calculation based on the two pieces of information and the AI data (for example, the input data of the second AI model or the output data of the second AI model) received and sent by the second communication apparatus on the radio link, and determine the first AI model group based on a result of the mathematical calculation, to improve model performance of the AI model included in the first AI model group on the premise that the data on the radio link meets a bandwidth.

For the information D, when the first information includes the local computational power status information of the first communication apparatus, a complexity requirement of the model processing of the AI model may be related to a local computational power status of the first communication apparatus. Therefore, for the second communication apparatus, the first AI model group determined by the second communication apparatus based on the local computational power status information may be adapted to a local computational power status of the first communication apparatus, so that the first AI model that meets the local computational power status is provided, thereby improving a success rate of performing model processing by the first communication apparatus based on the first AI model.

For the information E, when the first information includes the channel state information, because the channel state information may reflect the channel feature of the radio channel between the first communication apparatus and the second communication apparatus, for the second communication apparatus, the second communication apparatus determines the first AI model group based on the channel state information, to be adapted to the channel feature, so that the data transmitted on the radio link meets the channel bandwidth requirement as much as possible, to improve transmission performance of the AI data corresponding to the AI model.

It may be understood that, when the first information includes two or more items of information in the foregoing information A to information E, based on a technical gain achieved in any item of information in the foregoing descriptions, a further superposition gain may be obtained via the two or more items of information.

In a possible implementation, the first communication apparatus sends the first information in step S301. That the first information is used to determine the first AI model group includes: The first information is used to update a second AI model group to obtain the first AI model group; and the second AI model group includes a third AI model and a fourth AI model, the third AI model is deployed on the first communication apparatus, the fourth AI model is deployed on the second communication apparatus, and an input of the third AI model includes an output of the fourth AI model, or an input of the fourth AI includes an output of the third AI model. Specifically, for the second communication apparatus, after the second communication apparatus receives the first information, the second communication apparatus may update the second AI model group based on the first information, to obtain the first AI model group. In other words, the first information sent by the first communication apparatus may be used to update another AI model, so that the solution is applicable to an AI model update scenario.

Optionally, "update" may be replaced with another term, for example, "modify", "iterate", "optimize", "process", or the like.

Optionally, when the second AI model group is considered as one AI model, the third AI model and the fourth AI model may be understood as two AI submodels in the AI model.

Optionally, the third AI model and the second AI model included in the second AI model group may be general models or dedicated models, so that different types of models are updated.

It should be understood that the general model may be referred to as a basic model, a large model, or an L0 model. The dedicated model may be referred to as a small model, an L1 model, an L2 model, or the like.

A large model is used as an example. The large model may be a machine learning model with a large quantity of parameters and a complex structure, and can process massive data and complete various complex tasks, such as natural language processing, computer vision, and speech recognition.

Optionally, the large model is usually built upon deep neural networks and has billions or even hundreds of billions of parameters.

Optionally, the large model may be designed to improve an expression capability and prediction performance of the model, to process more complex tasks and data.

Optionally, the large model can learn complex patterns and features by training massive data, has generalization capabilities that are more powerful, and can accurately predict unprocessed data.

In contrast, the small model may be a model with fewer parameters and fewer layers. Usually, compared with the small model, the large model usually has more parameters and deeper layers, and has a stronger expression capability and higher accuracy. However, the large model also requires more compute resources and time for training and inference, and is applicable to a scenario with a large data amount and sufficient compute resources, for example, cloud computing, high-performance computing, or artificial intelligence.

Optionally, the small model has advantages such as lightweight, high efficiency, and easy deployment, and is applicable to a scenario with a small data amount and limited compute resources, for example, a mobile application, an embedded device, or an internet of things.

In a possible implementation, the first information sent by the first communication apparatus in step S301 is information periodically sent, and/or the second information sent by the second communication apparatus in step S302 is information periodically sent. Specifically, the first information may be one of the bases for determining the AI model, and the second information may be used to deploy the AI model. The AI model can be periodically determined and/or periodically deployed in a manner of periodically sending the first information and/or the second information between the first communication apparatus and the second communication apparatus, so that the AI model is iteratively updated a plurality of times through a periodic process.

In a possible implementation, the first information sent by the first communication apparatus in step S301 is used to determine the first AI model group, and the AI model in the first AI model group is a dedicated model. Specifically, the first communication apparatus may be a terminal device. Therefore, an AI model deployed on the terminal device may be a dedicated model, and the first information sent by the terminal device may be used to determine the dedicated model. Different terminal devices may have different device-side characteristics (for example, different local data, different local computational powers, and different channel features). Therefore, in this manner in which the dedicated model is deployed on the terminal device, the AI model deployed on the terminal device can be adapted to the device-side characteristic of the terminal device, so that model processing performance of the AI model is improved.

Based on the technical solution shown in FIG. 3, after the first communication apparatus sends, in step S301, the first information used to determine the first AI model group, the first communication apparatus may receive the second information in step S302, where the second information includes the model parameter of the first AI model group or the model parameter of the first AI model in the first AI model group. In other words, the second communication apparatus is used as a receiver of the first information, and the second communication apparatus may determine the first AI model group based on the first information from the first communication apparatus, and deploy the first AI model in the first communication apparatus via the second information. Therefore, if a communication apparatus in a communication system is used as an AI participant node, and its computational power can be applied to AI model processing, the first information from the first communication apparatus may also be used as one of determining bases for the second communication apparatus to determine the AI model, so that the AI model determined by the second communication apparatus can be adapted to the first communication apparatus as much as possible, thereby improving processing performance of model processing subsequently performed by the first communication apparatus based on the AI model.

FIG. 6 is a diagram of an implementation of a communication method according to this application. The method includes the following steps.

S601: A second communication apparatus sends third information, and correspondingly, a third communication apparatus receives the third information. The third information is used to determine a third AI model group, and the third AI model group includes a fifth AI model and a sixth AI model; and the fifth AI model is deployed on a first communication apparatus, the sixth AI model is deployed on the second communication apparatus, and an input of the fifth AI model includes an output of the sixth AI model, or an input of the sixth AI includes an output of the fifth AI model.

S602: The third communication apparatus sends fourth information, and correspondingly, the second communication apparatus receives the fourth information. The fourth information includes a model parameter of the third AI model group.

It should be noted that the second communication apparatus and the third communication apparatus may be implemented in a plurality of manners. The second communication apparatus may be a terminal device or an access network device, and the third communication apparatus may be a cloud server or a core network device. For example, when the third communication apparatus is a cloud server, the second communication apparatus may communicate with the cloud server via a core network device. For another example, when the third communication apparatus is a core network device, the second communication apparatus may be a terminal device, and the terminal device may communicate with the core network device via an access network device. For another example, when the third communication apparatus is a core network device, the second communication apparatus may be an access network device, and the access network device may communicate with the core network device through a communication interface between the access network device and the core network device.

It should be understood that, that the third AI model group includes a fifth AI model and the fifth AI model may be understood as that a function of the third AI model group is implemented through at least model processing of the fifth AI model and model processing of the sixth AI model. In other words, after receiving the fourth information, the second communication apparatus may determine a model parameter of the fifth AI model and a model parameter of the sixth AI model. In addition, the second communication apparatus may deploy the fifth AI model in the first communication apparatus, and deploy the sixth AI model in the second communication apparatus, so that model processing of the fifth AI model and the sixth AI model is implemented. Optionally, the model processing may include one or more of model update processing, model training processing, and model inference processing.

Optionally, when the third AI model group is considered as one AI model, the fifth AI model and the sixth AI model may be understood as two AI submodels in the AI model.

In a possible implementation, the third communication apparatus is a functional entity that determines, based on the third information, the third AI model group. Specifically, the third communication apparatus may communicate with one or more second communication apparatuses, and the third communication apparatus may receive information (for example, one or more pieces of third information) from the one or more second communication apparatuses, to generate/obtain/determine a third AI model group. In other words, the second communication apparatus may collect information and generate a model based on the collected information. Subsequently, the second communication apparatus may deploy an AI model in one or more second communication apparatuses (and corresponding first communication apparatuses).

Optionally, the AI model in the third AI model group is a general model. In this manner, the third communication apparatus may determine the general model via information (for example, one or more pieces of third information) from the one or more second communication apparatuses. Subsequently, the general model with high generalization and good universality may be deployed on each of the plurality of second communication apparatuses and a first communication apparatus connected to each of the second communication apparatuses.

It can be learned from the foregoing descriptions that the third information sent by the second communication apparatus in step S601 may be used to determine the third AI model group. It can be learned from the process shown in Manner A to Manner E that the third information includes one or more of the following information 1 to information 5. In other words, the third communication apparatus may obtain, via the one or more of the information 1 to the information 5 included in the following third information, parameters needed in Manner A to Manner E, and generate the third AI model group in one of Manner A to Manner E.

Information 1: third dimension information. When the input of the fifth AI model includes the output of the sixth AI model, the third dimension information is used to determine dimension information of input data of the fifth AI model or dimension information of output data of the sixth AI model.

Information 2: fourth dimension information. When the input of the sixth AI model includes the output of the fifth AI model, the fourth dimension information is used to determine dimension information of output data of the fifth AI model or dimension information of input data of the sixth AI model.

Information 3: a model parameter of an AI model in one or more AI model groups. Each group of the one or more AI model groups includes a dedicated model deployed on the first communication apparatus and a dedicated model deployed on the second communication apparatus.

Information 4: data from one or more first communication apparatuses connected to the second communication apparatus.

Information 5: input data of an AI model deployed on the second communication apparatus and label data of the input data of the AI model deployed on the second communication apparatus.

For the information 1 and the information 2, the third communication apparatus may determine, via the third information, dimension information of data transmitted on a communication link between the first communication apparatus and the second communication apparatus. For example, the dimension information may be a quantity of tokens (tokens) or a dimension of an embedding (embedding) vector. When a communication bandwidth between the first communication apparatus and the second communication apparatus is fixed, because a dimension of the data transmitted on the communication link is associated with processing performance of the AI model, an implementation process in which the third communication apparatus determines the first AI model group can be simplified in this manner, so that processing performance of the AI model included in the first AI model group can also be improved while complexity of the third communication apparatus is reduced.

Optionally, the dimension information includes at least one of the following: an upper limit value of a dimension, a lower limit value of the dimension, the dimension expected by the second communication apparatus (or the dimension not expected by the first communication apparatus), and a value range of the dimension expected by the second communication apparatus (or a value range of the dimension not expected by the first communication apparatus). Specifically, the dimension information determined based on the third dimension information or the fourth dimension information may include at least one of the foregoing items, so that flexibility of implementing the solution is improved.

Optionally, the dimension information may include a value, a quantized value, an index of the value, an index of the quantized value of any of the foregoing items. Other implementations are also possible.

For example, when the dimension information includes the upper limit value of the dimension and/or the lower limit value of the dimension, the third communication apparatus may use, as one of bases for determining the AI model, a range indicated by the upper limit value and/or the lower limit value, so that flexibility of implementing the solution can be improved.

For another example, when the dimension information includes the dimension expected by the second communication apparatus and/or the value range of the dimension expected by the second communication apparatus, the AI model determined by the third communication apparatus based on the dimension information can meet an expectation of the second communication apparatus.

Optionally, the third dimension information or the fourth dimension information is determined based on channel state information. Specifically, the third dimension information or the fourth dimension information included in the third information may be determined based on the channel state information, so that the third dimension information or the fourth dimension information can reflect a channel feature of a radio channel between the first communication apparatus and the second communication apparatus to some extent. In this way, the AI model that may be subsequently obtained based on the third information can be adapted to the channel feature of the radio channel, to improve transmission performance of AI data corresponding to the AI model. In addition, when the AI model obtained based on the first information can be adapted to the channel feature of the radio channel, the data transmitted on the radio link can also meet a channel bandwidth requirement as much as possible, so that model performance of the AI model included in the first AI model group is improved.

For the information 3, when the third information includes the model parameter of the AI model in the one or more AI model groups, the third communication apparatus may obtain, based on the third information, one or more dedicated models deployed on the first communication apparatus and the second communication apparatus. In this manner, the third communication apparatus may obtain a model characteristic of the one or more dedicated models, and reflect the obtained characteristic in the third AI model group, to improve generalization (or universality) of the general model included in the third AI model group.

For the information 4, when the third information includes the data from the one or more first communication apparatuses (for example, a terminal device) connected to the second communication apparatus, different terminal devices may have different data characteristics (for example, different data may be collected at different geographical locations, different data may be collected at different time, and different data may correspond to different radio channels of a user). Therefore, in this manner, the third communication apparatus obtains the third AI model group based on these data characteristics, to improve generalization (or universality) of the general model included in the third AI model group.

For the information 5, when the third information includes the input data of the AI model deployed on the second communication apparatus and the label data of the input data of the AI model deployed on the second communication apparatus, because the input data may be used as the input of the sixth AI model, and the label data may be used as one of bases for determining model processing performance of the sixth AI model, for the third communication apparatus, the third communication apparatus may obtain an AI model with good performance based on the two items of information.

In addition, for the second communication apparatus, the second communication apparatus may implement mutual information-based mathematical calculation based on the two pieces of information and the AI data (for example, the input data of the sixth AI model or the output data of the sixth AI model) received and sent by the second communication apparatus on the radio link, and determine the third AI model group based on a result of the mathematical calculation, to improve model performance of the AI model included in the third AI model group on the premise that the data on the radio link meets a bandwidth.

It may be understood that, when the third information includes two or more items of information in the foregoing information 1 to information 5, based on a technical gain achieved in any item of information in the foregoing descriptions, a further superposition gain may be obtained via the two or more items of information.

Optionally, each item of information included in the third information may be a part of information obtained by the second communication apparatus by filtering a plurality of items of information. The following uses an example in which the third information includes the information 3 for description.

In an implementation example, when the third information includes the information 3, N (N is greater than or equal to 2) AI model groups may be deployed on the first communication apparatus and the second communication apparatus, each AI model group includes a dedicated model deployed on the first communication apparatus and a dedicated model deployed on the second communication apparatus, and the information 3 may include model parameters of k (k is a positive integer) AI model groups in the N AI model groups.

In the example of the information 3, the second communication apparatus may determine the k AI model groups from the N AI model groups based on target information (the target information may be used to determine a general AI model group, a general AI model, a reference AI model, or the like; or the target information may be a general AI model group, a general AI model, a reference AI model, or the like). For example, the second communication apparatus may determine difference values (for example, cosine (cos) values corresponding to Logits) between representation parameters (for example, Logits) of the N AI model groups and a representation parameter that is of the AI model/AI model group and that is determined based on the target information, in other words, the second communication apparatus may determine N difference values, determine the k corresponding AI model groups based on k larger difference values in the N difference values, and include the model parameters of the k AI model groups in the information 3.

In another example of the information 3, the N AI model groups may include 2N dedicated models. For example, N of the 2N dedicated models are deployed on the first communication apparatus, and remaining N of the 2N dedicated models are deployed on the second communication apparatus. For ease of reference, in the following, the N dedicated models deployed on the first communication apparatus are denoted as N₁ dedicated models, and the N dedicated models deployed on the second communication apparatus are denoted as N₂ dedicated models. Then, the second communication apparatus may determine the k AI model groups from the 2N AI models based on target information (the target information may be used to determine a general AI model, a reference AI model, or the like; or the target information may be a general AI model, a reference AI model, or the like).

In addition, for any AI model in the 2N dedicated models, the second communication apparatus may determine difference values between a representation parameter (for example, Logits) of the any AI model and representation parameters that are of the AI models and that are determined based on the target information (for example, cosine (cos) values between Logits), in other words, the second communication apparatus may determine 2N difference values respectively corresponding to the 2N dedicated models. Subsequently, the second communication apparatus may determine, based on the 2N difference values, k larger difference values in the N difference values corresponding to N₁ dedicated models, determine the k corresponding AI model groups, and include the model parameters of the k AI model groups in the information 3. Alternatively, the second communication apparatus may determine, based on the 2N difference values, k larger difference values in the N difference values corresponding to N₂ dedicated models, determine the k corresponding AI model groups, and include the model parameters of the k AI model groups in the information 3.

Optionally, the target information may be preconfigured in the second communication apparatus, or may be configured by the third communication apparatus (or another device) for the second communication apparatus. This is not limited herein.

Similarly, when the third information includes the information 1, the information 2, the information 4, or the information 5, refer to the foregoing implementation. Details are not described herein.

In a possible implementation, the second communication apparatus may send the third information in step S601. That the third information is used to determine a third AI model group includes: The third information is used to update a fourth AI model group to obtain the third AI model group; and the fourth AI model group includes a seventh AI model and an eighth AI model, the seventh AI model is deployed on the first communication apparatus, the eighth AI model is deployed on the second communication apparatus, and an input of the seventh AI model includes an output of the eighth AI model, or an input of the eighth AI includes an output of the seventh AI model. Specifically, for the third communication apparatus, after receiving the third information, the third communication apparatus may update the fourth AI model group based on the third information, to obtain the third AI model group. In other words, the third information sent by the second communication apparatus may be used to update another AI model, so that the solution is applicable to an AI model update scenario. Optionally, when the fourth AI model group is considered as one AI model, the seventh AI model and the eighth AI model may be understood as two AI submodels in the AI model.

In a possible implementation, the third information sent by the second communication apparatus in step S601 is information periodically sent, and/or the fourth information sent by the third communication apparatus in step S602 is information periodically sent. Specifically, the third information may be one of the bases for determining the AI model, and the fourth information may be used to deploy the AI model. The AI model can be periodically determined and/or periodically deployed in a manner of periodically sending the third information and/or the fourth information between the second communication apparatus and the third communication apparatus, so that the AI model is iteratively updated a plurality of times through a periodic process.

Based on the technical solution shown in FIG. 6, after the second communication apparatus sends, in step S601, the third information used to determine the third AI model group, the second communication apparatus may receive the fourth information in step S602, where the third information includes the model parameter of the third AI model group. In other words, the third communication apparatus is used as a receiver of the third information. The third communication apparatus may determine the third AI model group based on the third information from the second communication apparatus, and via the fourth information, the second communication apparatus can subsequently deploy the fifth AI model in the first communication apparatus, and deploy the sixth AI model in the second communication apparatus. Therefore, if a communication apparatus in a communication system is used as an AI participant node, and its computational power can be applied to AI model processing, the third information from the second communication apparatus may also be used as one of determining bases for the third communication apparatus to determine the AI model, so that the AI model determined by the third communication apparatus can be adapted to the second communication apparatus as much as possible, thereby improving a success rate of subsequently performing model processing on the AI model by the second communication apparatus.

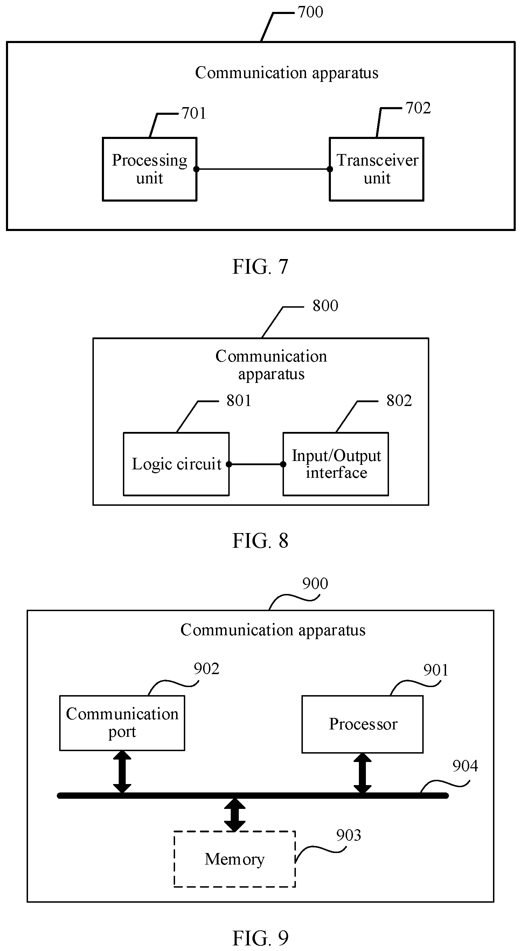

Refer to FIG. 7. An embodiment of this application provides a communication apparatus 700. The communication apparatus 700 may implement a function of the second communication apparatus or the first communication apparatus in the foregoing method embodiments, and therefore can also implement beneficial effects of the foregoing method embodiments. In this embodiment of this application, the communication apparatus 700 may be a first communication apparatus (or a second communication apparatus), or may be an integrated circuit, an element, or the like inside the first communication apparatus (or the second communication apparatus), for example, a chip.

It should be noted that a transceiver unit 702 may include a sending unit and a receiving unit, which are respectively configured to perform sending and receiving.

In a possible implementation, when the apparatus 700 is configured to perform the method performed by the first communication apparatus in the foregoing embodiments, the apparatus 700 includes a processing unit 701 and a transceiver unit 702. The processing unit 701 is configured to determine first information. The transceiver unit 702 is configured to send the first information, where the first information is used to determine a first artificial intelligence AI model group, and the first AI model group includes a first AI model and a second AI model. The first AI model is deployed on the first communication apparatus, and the second AI model is deployed on a second communication apparatus; and an input of the first AI model includes an output of the second AI model, or an input of the second AI model includes an output of the first AI model. The transceiver unit 702 is further configured to receive second information from the second communication apparatus, where the second information includes a model parameter of the first AI model group or a model parameter of the first AI model.

In a possible implementation, when the apparatus 700 is configured to perform the method performed by the second communication apparatus in the foregoing embodiments, the apparatus 700 includes a processing unit 701 and a transceiver unit 702. The transceiver unit 702 receives first information. The processing unit 701 is configured to determine a first AI model group based on the first information, where the first AI model group includes a first AI model and a second AI model. The first AI model is deployed on a first communication apparatus, the second AI model is deployed on the second communication apparatus, and an input of the first AI model includes an output of the second AI model, or an input of the second AI includes an output of the first AI model. The transceiver unit 702 is further configured to send second information, where the second information includes a model parameter of the first AI model group or a model parameter of the first AI model.

In a possible implementation, when the apparatus 700 is configured to perform the method performed by the first communication apparatus in the foregoing embodiments, the apparatus 700 includes a processing unit 701 and a transceiver unit 702. The processing unit 701 is configured to determine third information. The transceiver unit 702 is configured to send third information, where the third information is used to determine a third AI model group, and the third AI model group includes a fifth AI model and a sixth AI model. The fifth AI model is deployed on the first communication apparatus, the sixth AI model is deployed on a second communication apparatus, and an input of the fifth AI model includes an output of the sixth AI model, or an input of the sixth AI includes an output of the fifth AI model. The transceiver unit 702 is further configured to receive fourth information from a third communication apparatus, where the fourth information includes a model parameter of the third AI model group.

In a possible implementation, when the apparatus 700 is configured to perform the method performed by the second communication apparatus in the foregoing embodiments, the apparatus 700 includes a processing unit 701 and a transceiver unit 702. The transceiver unit 702 is configured to receive third information. The processing unit 701 is configured to determine a third AI model group based on the third information, where the third AI model group includes a fifth AI model and a sixth AI model. The fifth AI model is deployed on a first communication apparatus, and the sixth AI model is deployed on the second communication apparatus; and an input of the fifth AI model includes an output of the sixth AI model, or an input of the sixth AI model includes an output of the fifth AI model. The transceiver unit 702 is further configured to send fourth information, where the fourth information includes a model parameter of the third AI model group.

It should be noted that, for content such as an information execution process of the units in the communication apparatus 700, refer to the descriptions in the foregoing method embodiments of this application. Details are not described herein again.

FIG. 8 is another diagram of a structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8. The input/output interface 802 may include an input interface and an output interface. Alternatively, the communication interface may be a transceiver circuit, and the transceiver circuit may include an input interface circuit and an output interface circuit.

Optionally, the logic circuit 801 is configured to determine first information. The input/output interface 802 is configured to send the first information, where the first information is used to determine a first artificial intelligence AI model group, and the first AI model group includes a first AI model and a second AI model. The first AI model is deployed on a first communication apparatus, and the second AI model is deployed on a second communication apparatus; and an input of the first AI model includes an output of the second AI model, or an input of the second AI model includes an output of the first AI model. The input/output interface 802 is further configured to receive second information from the second communication apparatus, where the second information includes a model parameter of the first AI model group or a model parameter of the first AI model.

Optionally, the input/output interface 802 receives first information. The logic circuit 801 is configured to determine a first AI model group based on the first information, where the first AI model group includes a first AI model and a second AI model. The first AI model is deployed on a first communication apparatus, the second AI model is deployed on a second communication apparatus, and an input of the first AI model includes an output of the second AI model, or an input of the second AI includes an output of the first AI model. The input/output interface 802 is further configured to send second information, where the second information includes a model parameter of the first AI model group or a model parameter of the first AI model.

Optionally, the logic circuit 801 is configured to determine third information. The input/output interface 802 is configured to send the third information, where the third information is used to determine a third AI model group, and the third AI model group includes a fifth AI model and a sixth AI model. The fifth AI model is deployed on a first communication apparatus, the sixth AI model is deployed on a second communication apparatus, and an input of the fifth AI model includes an output of the sixth AI model, or an input of the sixth AI includes an output of the fifth AI model. The input/output interface 802 is further configured to receive fourth information from a third communication apparatus, where the fourth information includes a model parameter of the third AI model group.

Optionally, the input/output interface 802 is configured to receive third information. The logic circuit 801 is configured to determine a third AI model group based on the third information, where the third AI model group includes a fifth AI model and a sixth AI model. The fifth AI model is deployed on a first communication apparatus, and the sixth AI model is deployed on a second communication apparatus; and an input of the fifth AI model includes an output of the sixth AI model, or an input of the sixth AI model includes an output of the fifth AI model. The input/output interface 802 is further configured to send fourth information, where the fourth information includes a model parameter of the third AI model group.

The logic circuit 801 and the input/output interface 802 may further perform other steps performed by the first communication apparatus or the second communication apparatus in any embodiment, and achieve corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field programmable gate arrays (field-programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), another integrated chip, or any combination of the foregoing chips or processors.

FIG. 9 shows a communication apparatus 900 in the foregoing embodiments according to an embodiment of this application. The communication apparatus 900 may be specifically the communication apparatus used as the terminal device in the foregoing embodiments. In an example shown in FIG. 9, the terminal device is implemented by using a terminal device (or a component in the terminal device).

In a diagram of a possible logical structure of the communication apparatus 900, the communication apparatus 900 may include but is not limited to at least one processor 901 and a communication port 902.

The transceiver unit 702 shown in FIG. 7 may be a communication interface. The communication interface may be a communication port 902 in FIG. 9. The communication port 902 may include an input interface and an output interface. Alternatively, the communication port 902 may be a transceiver circuit, and the transceiver circuit may include an input interface circuit and an output interface circuit.

Further, optionally, the apparatus may further include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 900 shown in FIG. 9 may be specifically configured to implement steps implemented by the terminal device in the foregoing method embodiments, and achieve technical effects corresponding to the terminal device. For a specific implementation of the communication apparatus shown in FIG. 9, refer to the descriptions in the foregoing method embodiments. Details are not described herein again one by one.

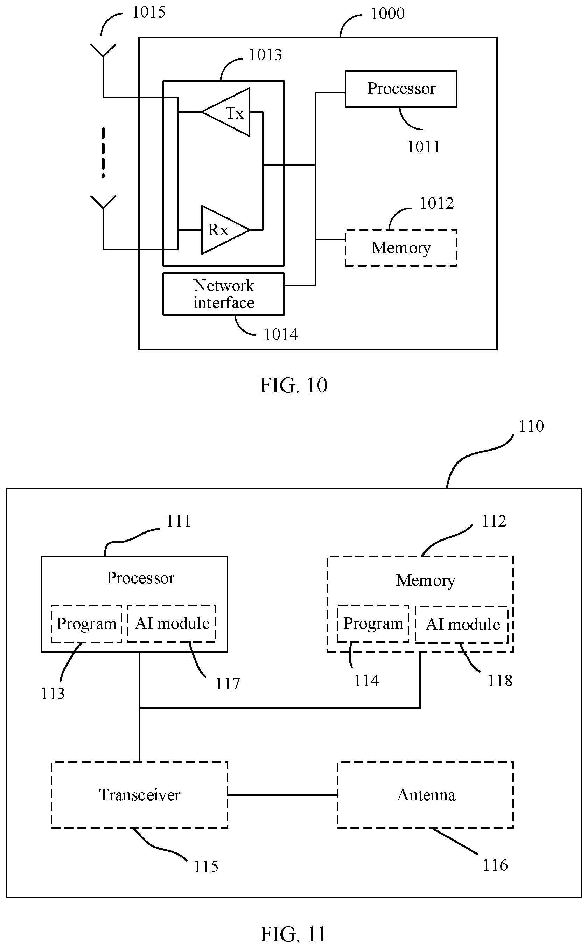

FIG. 10 is a diagram of a structure of a communication apparatus 1000 in the foregoing embodiments according to an embodiment of this application. The communication apparatus 1000 may be specifically the communication apparatus used as the network device in the foregoing embodiments. In an example shown in FIG. 10, the network device is implemented by using a network device (or a component in the network device). For a structure of the communication apparatus, refer to the structure shown in FIG. 10.

The communication apparatus 1000 includes at least one processor 1011 and at least one network interface 1014. Further optionally, the communication apparatus further includes at least one memory 1012, at least one transceiver 1013, and one or more antennas 1015. The processor 1011, the memory 1012, the transceiver 1013, and the network interface 1014 are connected, for example, connected through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device over a communication link. For example, the network interface 1014 may include a network interface between the communication apparatus and a core network device, for example, an S1 interface. The network interface may include a network interface between the communication apparatus and another communication apparatus (for example, another network device or a core network device), for example, an X2 or Xn interface.

The transceiver unit 702 shown in FIG. 7 may be a communication interface. The communication interface may be a network interface 1014 in FIG. 10. The network interface 1014 may include an input interface and an output interface. Alternatively, the network interface 1014 may be a transceiver circuit, and the transceiver circuit may include an input interface circuit and an output interface circuit.

The processor 1011 is mainly configured to: process a communication protocol and communication data, control the entire communication apparatus, execute a software program, and process data of the software program, for example, is configured to support the communication apparatus in performing an action described in embodiments. The communication apparatus may include a baseband processor and a central processing unit. The baseband processor is mainly configured to process the communication protocol and the communication data. The central processing unit is mainly configured to: control the entire terminal device, execute the software program, and process the data of the software program. The processor 1011 in FIG. 10 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to improve a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and the data. The memory 1012 may exist independently, and is connected to the processor 1011. Optionally, the memory 1012 and the processor 1011 may be integrated together, for example, integrated into one chip. The memory 1012 can store program code for executing the technical solutions in embodiments of this application, and the processor 1011 controls the execution. Various types of executed computer program code may also be considered as drivers of the processor 1011.

FIG. 10 shows only one memory and one processor. An actual terminal device may have a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to: receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes the digital baseband signal or the digital intermediate frequency signal, for example, performs demodulation and decoding. In addition, the transmitter Tx of the transceiver 1013 is further configured to: receive a modulated digital baseband signal or digital intermediate frequency signal from the processor 1011, convert the modulated digital baseband signal or digital intermediate frequency signal into a radio frequency signal, and send the radio frequency signal through the one or more antennas 1015. Specifically, the receiver Rx may selectively perform one or more levels of down-mixing processing and analog-to-digital conversion processing on the radio frequency signal to obtain the digital baseband signal or the digital intermediate frequency signal, and a sequence of the down-mixing processing and the analog-to-digital conversion processing is adjustable. The transmitter Tx may selectively perform one or more levels of up-mixing processing and digital-to-analog conversion processing on the modulated digital baseband signal or digital medium-frequency signal to obtain the radio frequency signal. A sequence of the up-mixing processing and the digital-to-analog conversion processing is adjustable. The digital baseband signal and the digital intermediate frequency signal may be collectively referred to as a digital signal.

The transceiver 1013 may also be referred to as a transceiver unit, a transceiver machine, a transceiver apparatus, or the like. Optionally, a device that is in the transceiver unit and that is configured to implement a receiving function may be considered as a receiving unit. A device that is in the transceiver unit and that is configured to implement a sending function may be considered as a sending unit. That is, the transceiver unit includes the receiving unit and the sending unit. The receiving unit may also be referred to as a receiver machine, an input port, a receiving circuit, or the like. The sending unit may be referred to as a transmitter machine, a transmitter, a transmitting circuit, or the like.

It should be noted that the communication apparatus 1000 shown in FIG. 10 may be specifically configured to implement steps implemented by the network device in the foregoing method embodiments, and achieve technical effects corresponding to the network device. For a specific implementation of the communication apparatus 1000 shown in FIG. 10, refer to the descriptions in the foregoing method embodiments. Details are not described herein again one by one.

FIG. 11 is a diagram of a structure of a communication apparatus in the foregoing embodiments according to an embodiment of this application.

It may be understood that the communication apparatus 110 includes, for example, modules, units, elements, circuits, or interfaces, which are appropriately configured together to perform the technical solutions provided in this application. The communication apparatus 110 may be the terminal device or the network device described above, or may be a component (for example, a chip) in these devices, and is configured to implement the method described in the following method embodiments. The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 111 may include a program 113 (which may also be referred to as code or instructions sometimes). The program 113 may be run on the processor 111, so that the communication apparatus 110 performs the method described in the following embodiments. In another possible design, the communication apparatus 110 includes a circuit (not shown in FIG. 11).

Optionally, the communication apparatus 110 may include one or more memories 112. The memory stores a program 114 (which may also be referred to as code or instructions sometimes). The program 114 may be run on the processor 111, so that the communication apparatus 110 performs the method described in the foregoing method embodiments.

Optionally, the processor 111 and/or the memory 112 may include AI modules 117 and 118, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 may also be referred to as a processing unit sometimes, and controls a communication apparatus (for example, a RAN node or a terminal). The transceiver 115 sometimes may also be referred to as a transceiver unit, a transceiver machine, a transceiver circuit, a transceiver, or the like, and is configured to implement a transceiver function of the communication apparatus through the antenna 116.

The processing unit 701 shown in FIG. 7 may be the processor 111. The transceiver unit 702 shown in FIG. 7 may be a communication interface. The communication interface may be the transceiver 115 in FIG. 11. The transceiver 115 may include an input interface and an output interface. Alternatively, the transceiver 115 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method according to the possible implementations of the first communication apparatus or the second communication apparatus in the foregoing embodiments.

An embodiment of this application further provides a computer program product (or referred to as a computer program). When the computer program product is executed by a processor, the processor performs the method according to the possible implementations of the first communication apparatus or the second communication apparatus.

An embodiment of this application further provides a chip system. The chip system includes at least one processor, configured to support a communication apparatus in implementing a function in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first communication apparatus or the second communication apparatus in the foregoing method embodiments.

An embodiment of this application further provides a communication system. The network system architecture includes the first communication apparatus and the second communication apparatus in any one of the foregoing embodiments.

In several embodiments provided in this application, it should be understood that the disclosed system, apparatus, and method may be implemented in other manners. For example, the described apparatus embodiments are merely examples. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or some of the technical solutions may be implemented in a form of a software product. The computer software product is stored in a storage medium and includes several instructions for instructing a computer device (which may be a personal computer, a server, a network device, or the like) to perform all or some of the steps in the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, wherein the method is applied to a first communication apparatus, and the method comprises:
sending first information, wherein the first information is used to determine a first artificial intelligence AI model group, and the first AI model group comprises a first AI model and a second AI model, wherein the first AI model is deployed on the first communication apparatus, and the second AI model is deployed on a second communication apparatus; and an input of the first AI model comprises an output of the second AI model, or an input of the second AI model comprises an output of the first AI model; and
receiving second information from the second communication apparatus, wherein the second information comprises a model parameter of the first AI model group or a model parameter of the first AI model.

2. The method according to claim 1, wherein the first information comprises first dimension information or second dimension information; and
when the input of the first AI model comprises the output of the second AI model, the first dimension information is used to determine dimension information of input data of the first AI model or dimension information of output data of the second AI model; and
when the input of the second AI model comprises the output of the first AI model, the second dimension information is used to determine dimension information of output data of the first AI model or dimension information of input data of the second AI model.

3. The method according to claim 2, wherein the dimension information comprises at least one of the following:
an upper limit value of a dimension, a lower limit value of the dimension, the dimension expected by the first communication apparatus, and a value range of the dimension expected by the first communication apparatus.

4. The method according to claim 2 or 3, wherein the first dimension information or the second dimension information is determined based on channel state information.

5. The method according to any one of claims 1 to 4, wherein the first information comprises at least one of the following:
the input data of the first AI model, label data of the input data of the first AI model, local computational power status information of the first communication apparatus, and the channel state information.

6. The method according to any one of claims 1 to 5, wherein that the first information is used to determine the first AI model group comprises:
the first information is used to update a second AI model group to obtain the first AI model group; and the second AI model group comprises a third AI model and a fourth AI model, the third AI model is deployed on the first communication apparatus, the fourth AI model is deployed on the second communication apparatus, and an input of the third AI model comprises an output of the fourth AI model, or an input of the fourth AI comprises an output of the third AI model.

7. The method according to any one of claims 1 to 6, wherein the first information is information sent periodically, and/or, the second information is information sent periodically.

8. The method according to any one of claims 1 to 7, wherein the AI model in the first AI model group is a dedicated model.

9. A communication method, applied to a second communication apparatus, wherein the method comprises:
receiving first information; and
determining a first AI model group based on the first information, wherein the first AI model group comprises a first AI model and a second AI model, wherein the first AI model is deployed on a first communication apparatus, the second AI model is deployed on the second communication apparatus, and an input of the first AI model comprises an output of the second AI model, or an input of the second AI comprises an output of the first AI model; and
sending second information, wherein the second information comprises a model parameter of the first AI model group or a model parameter of the first AI model.

10. The method according to claim 9, wherein the second communication apparatus is a functional entity that determines, based on the first information, an AI model group list, the AI model group list comprises one or more AI model groups, and the one or more AI model groups comprise the first AI model group.

11. The method according to claim 10, wherein the second communication apparatus is a functional entity that determines, based on the first information, the AI model group list and selects, from the AI model group list, part or all of AI model groups to be used by the first communication apparatus.

12. The method according to any one of claims 9 to 11, wherein the first information comprises first dimension information or second dimension information; and
when the input of the first AI model comprises the output of the second AI model, the first dimension information is used to determine dimension information of input data of the first AI model or dimension information of output data of the second AI model; and
when the input of the second AI model comprises the output of the first AI model, the second dimension information is used to determine dimension information of output data of the first AI model or dimension information of input data of the second AI model.

13. The method according to claim 12, wherein the dimension information comprises at least one of the following:
an upper limit value of a dimension, a lower limit value of the dimension, the dimension expected by the first communication apparatus, and a value range of the dimension expected by the first communication apparatus.

14. The method according to claim 12 or 13, wherein the first dimension information or the second dimension information is determined based on channel state information.

15. The method according to any one of claims 11 to 14, wherein the first information comprises at least one of the following:
the input data of the first AI model, label data of the input data of the first AI model, local computational power status information of the first communication apparatus, and the channel state information.

16. The method according to any one of claims 11 to 15, wherein determining the first AI model group based on the first information comprises:
updating a second AI model group based on the first information, to obtain the first AI model group, wherein the second AI model group comprises a third AI model and a fourth AI model, the third AI model is deployed on the first communication apparatus, and the fourth AI model is deployed on the second communication apparatus; and an input of the third AI model comprises an output of the fourth AI model, or an input of the fourth AI comprises an output of the third AI model.

17. The method according to any one of claims 11 to 16, wherein the first information is information sent periodically, and/or, the second information is information sent periodically.

18. The method according to any one of claims 11 to 17, wherein the AI model in the first AI model group is a dedicated model.

19. A communication apparatus, comprising a module configured to perform the method according to any one of claims 1 to 18.

20. A communication apparatus, comprising at least one processor, wherein the at least one processor is coupled to a memory; and the at least one processor is configured to perform the method according to any one of claims 1 to 18.

21. The communication apparatus according to claim 20, wherein the communication apparatus is a chip or a chip system.

22. A readable storage medium, wherein the storage medium stores a computer program or instructions, and when the computer program or the instructions are executed by a communication apparatus, the method according to any one of claims 1 to 18 is implemented.
